# EUROPEAN PATENT APPLICATION

(11) **EP 2 666 629 A1**
(43) Date of publication of application: **27.11.2013**
(21) Application number: 12736563.3
(22) Date of filing: 17.01.2012
(51) Int. Cl.: B32B 27/30, B05D 1/36, B05D 5/00, B05D 7/02, B05D 7/24, B32B 27/00

(54) **RESIN SUBSTRATE PROVIDED WITH HARD-COAT COATING, AND METHOD FOR PRODUCING SAME**

(30) Priority: 20.01.2011 JP 2011009359
(71) Applicant: Asahi Glass Company, Limited, Tokyo 100-8405 (JP)
(72) Inventor: SHIBUYA, Takashi, Tokyo 100-8405 (JP); YAMAMOTO, Kyoko, Tokyo 100-8405 (JP)
(74) Representative: Müller-Boré & Partner Patentanwälte
(86) International application number: PCT/JP2012/050865
(87) International publication number: WO 2012/099125

(57) **Abstract**

To provide a resin substrate provided with a hard coating film which is excellent in weather resistant adhesion and weather cracking resistance. The resin substrate 1 provided with a hard coating film, comprises a resin substrate 2, and formed on at least one surface thereof, a primer layer 3 containing an acrylic polymer (P) as a main component, and a hard coating layer 4, sequentially from the resin substrate 2 side, wherein the silyl group-containing acrylic polymer (α) contained in the primer layer 3 comprises polymerized units derived from methyl methacrylate (MMA) and silyl group-containing polymerized units and does not contain polymerized units having an aromatic hydrocarbon group in a side chain; and the value of (content of the acrylic polymer (P))/(total amount of content of the acrylic polymer (P) and content of the silyl group-containing acrylic polymer (α)) × 100, is from 50 to 98 mass%.

## Description

### TECHNICAL FIELD

The present invention relates to a resin substrate provided with a hard coating film, and a process for its production.

### BACKGROUND ART

In recent years, as a window glass for a vehicle such as an automobile and a window glass for a building material to be attached to a building construction such as a house or a building, the demand for a transparent resin plate is increasing instead of a conventional inorganic glass plate.

It has been proposed to form a coating film on the surface of a transparent resin plate by means of various hard coating agents, particularly silicone type hard coating agents, for the purpose of improving the abrasion resistance and weather resistance of the transparent resin plate. Further, in such a case, it has been studied to interpose an adhesive layer such as a primer layer in order to improve the adhesion between the hard coating layer and the transparent resin plate.

In the structure having a primer layer interposed between the transparent resin plate and the hard coating layer, however, there have been a problem in the impact resistance of the primer layer itself, a problem such that the adhesion between the primer layer and the hard coating layer is inadequate, and a problem in the weather resistance as the entire coating film, such as cracking or a decrease in the adhesion after use for a long period of time. Especially when it is left under a high humidity environment for a long period of time, there has been a problem such that the adhesion between the primer layer and the silicone type hard coating layer tends to decrease, and peeling is likely to occur.

In view of these problems, Patent Document 1 proposes a resin substrate provided with a hard coating layer, wherein a primer layer is formed by a copolymerized polymer of γ-methacryloxypropyltrimethoxysilane and a reactive ultraviolet absorber, in order to improve the adhesion with the hard coating layer. Further, Patent Document 2 proposes a resin substrate provided with a hard coating layer, wherein a primer layer is formed by a copolymerized polymer of methyl methacrylate, γ-acryloxypropyltrimethoxysilane and a reactive ultraviolet absorber. Still further, Patent Document 3 discloses that in the covering member having a primer layer and a hard coating layer laminated on a resin substrate, for the purpose of improving the adhesion and the cracking resistance of the covering film, a flexibility-imparting agent is added to the hard coating layer, and at the same time, a thermosetting acrylic resin and a thermoplastic acrylic resin are incorporated in a weight ratio of from 95:5 to 30:70 to the primer layer.

However, in such a resin substrate provided with a hard coating layer, or a covering member, the adhesion between the primer layer and the silicone-type hard coating layer has been inadequate in a high humidity environment in each case, and especially when it is subjected to an accelerated weather resistance test under a severe humidity condition, peeling has been likely to occur between the primer layer and the hard coating layer.

### PRIOR ART DOCUMENTS

### PATENT DOCUMENTS

Patent Document 1: JP-A-2001-47574
Patent Document 2: JP-A-4-120181
Patent Document 3: JP-A-2006-240294

### DISCLOSURE OF INVENTION

### TECHNICAL PROBLEM

The present invention has been made to overcome the above-mentioned problems in the prior art, and it is an object of the present invention to provide a resin substrate provided with a hard coating film, wherein a silicone type hard coating layer is formed via a primer layer on a resin substrate, which is excellent not only in the abrasion resistance but also in the weather resistance such as cracking resistance (hereinafter referred to also as "weather cracking resistance") after a weather resistance test.

### SOLUTION TO PROBLEM

The resin substrate provided with a hard coating film of the present invention is a resin substrate provided with a hard coating film, which comprises a resin substrate, and, formed on at least one surface thereof in order from the resin substrate side, a primer layer containing an acrylic polymer (P) and a silyl group-containing acrylic polymer (α) as main components, and a hard coating layer containing a cured product of an organo polysiloxane as a main component, wherein the acrylic polymer (P) consists of polymerized units derived from an alkyl methacrylate having a C₁₋₆ alkyl group, and from 90 to 100 mol% of all polymerized units constituting the acrylic polymer (P) is polymerized units derived from methyl methacrylate; the silyl group-containing acrylic polymer (α) comprises polymerized units derived from methyl methacrylate (MMA) and polymerized units having a hydrolysable silyl group and/or a SiOH group, from 50 to 95 mol% of all polymerized units constituting the silyl group-containing acrylic polymer is polymerized units based on methyl methacrylate (MMA), and the silyl group-containing acrylic polymer (α) does not contain polymerized units having an aromatic hydrocarbon group in a side chain; and the mass ratio of the acrylic polymer (P) to the silyl group-containing acrylic polymer (α), i.e. the value of (content of the acrylic polymer (P))/(total amount of content of the acrylic polymer (P) and content of the silyl group-containing acrylic polymer (α)) × 100, is from 50 to 98 mass%.

The silyl group-containing acrylic polymer (α) preferably contains the polymerized units having a hydrolysable silyl group and/or a SiOH group in a proportion of from 5 to 50 mol% of all polymerized units constituting the silyl group-containing acrylic polymer (α).

Further, it is preferred that the silyl group-containing acrylic polymer (α) consists of the polymerized units derived from methyl methacrylate (MMA) and the polymerized units having a hydrolysable silyl group and/or a SiOH group, and the molar ratio of the polymerized units derived from methyl methacrylate (MMA) to the polymerized units having a hydrolysable silyl group and/or a SiOH group, is from 50:50 to 95:5.

Further, the polymerized units having a hydrolysable silyl group and/or a SiOH group, are preferably at least one member selected from the group consisting of polymerized units derived from 3-methacryloxypropyltrimethoxysilane, 3-methacryloxypropylmethyldimethoxysilane, 3-methacryloxypropyldimethylmethoxysilane, 3-methacryloxypropyltriethoxysilane, 3-methacryloxypropylmethyldiethoxysilane, 3-acryloxypropyltrimethoxysilane and 3-acryloxypropylmethyldimethoxysilane, and their hydrolysates and partial hydrolysates.

Further, the silyl group-containing acrylic polymer (α) preferably does not contain polymerized units having a hydroxyalkyl group.

Further, the acrylic polymer (P) preferably consists of polymerized units derived from methyl methacrylate. Further, the silyl group-containing acrylic polymer (α) preferably has a mass average molecular weight of from 5,000 to 300,000. Further, the acrylic polymer (P) as a main component of the primer layer preferably has a mass average molecular weight of from 20,000 to 1,500,000.

Further, it is preferred that the organo polysiloxane is composed solely of T units and Q units, and their ratio in number is T : Q = from 90 to 100 : from 10 to 0.

Further, the process for producing a resin substrate provided with a hard coating film of the present invention is a process for producing a resin substrate provided with a hard coating film, which comprises a step of applying and drying a composition for forming a primer layer containing an acrylic polymer (P) and a silyl group-containing acrylic polymer (α) as main components, on at least one surface of a resin substrate, to form a primer layer, and a step of applying and curing a composition for forming a hard coating layer containing an organo polysiloxane as a main component, on the primer layer, to form a hard coating layer, wherein the acrylic polymer (P) consists of polymerized units derived from an alkyl methacrylate having a C₁₋₆ alkyl group, and from 90 to 100 mol% of all polymerized units constituting the acrylic polymer (P) is polymerized units derived from methyl methacrylate; the silyl group-containing acrylic polymer (α) comprises polymerized units derived from methyl methacrylate (MMA) and polymerized units having a hydrolysable silyl group and/or a SiOH group in a side chain, from 50 to 95 mol% of all polymerized units constituting the silyl group-containing acrylic polymer (α) is polymerized units based on methyl methacrylate (MMA), and the silyl group-containing acrylic polymer (α) does not contain polymerized units having an aromatic hydrocarbon group in a side chain; and the mass ratio of the acrylic polymer (P) to the silyl group-containing acrylic polymer (α), i.e. the value of (content of the acrylic polymer (P))/(total amount of content of the acrylic polymer (P) and content of the silyl group-containing acrylic polymer (α)) × 100, is from 50 to 98 mass%.

The expression "to" showing the above numerical range is used to include the numerical values before and after thereof as the lower limit value and the upper limit value, and hereinafter in this specification, "to" is used to have the same meaning unless otherwise specified.

In this specification, the "hard coating film" is meant for a multi-layered coating film including a hard coating layer, formed on a resin substrate. That is, in the present invention, the entire coating film having the primer layer and the hard coating layer, is referred to as the "hard coating film".

A "hydrolysable silyl group" is meant for a silyl group having a hydrolysable group bonded directly to a silicon atom. Here, a "hydrolysable group" is meant for a group which can be converted to a hydroxy group (-OH group) by hydrolysis. Accordingly, "a hydrolysable silyl group and/or a SiOH group" means a silyl group having a hydrolysable group bonded to a silicon atom, including one wherein the hydrolysable group is partially hydrolyzed to a hydroxy group (-OH group). Here, "a hydrolysable silyl group and/or a SiOH group" may be reworded as "having at least one group selected from the group consisting of a hydrolysable silyl group and a SiOH group". Specific examples of the hydrolysable group will be described in detail hereinafter.

### ADVANTAGEOUS EFFECTS OF INVENTION

The resin substrate provided with a hard coating film of the present invention is excellent in the abrasion resistance and at the same time, excellent also in the weather resistance such as weather resistant adhesion, weather cracking resistance, etc. Further, according to the process for producing a resin substrate provided with a hard coating film of the present invention, it is possible to obtain a resin substrate provided with a hard coating film which is excellent in the abrasion resistance and at the same time, excellent also in the weather resistance such as weather resistant adhesion, weather cracking resistance, etc.

### BRIEF DESCRIPTION OF DRAWING

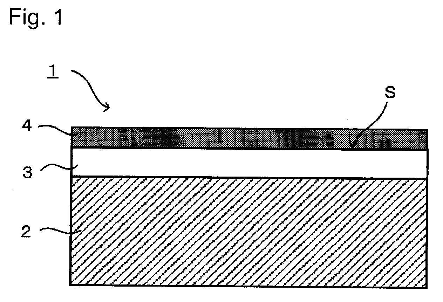

Fig. 1 is a cross-sectional schematic view of a resin substrate provided with a silicone type hard coating film of the present invention.

### DESCRIPTION OF EMBODIMENTS

Now, the present invention will be described in detail.

One embodiment of the resin substrate provided with a hard coating film of the present invention is shown in Fig. 1. In this hard coating film-provided resin substrate 1, on at least one surface of a resin substrate 2, a primer layer 3 containing an acrylic polymer (P) and a silyl group-containing acrylic polymer (α) as main components, and a hard coating layer 4 containing a cured product of an organo polysiloxane as a main component, are laminated in this order.

In the resin substrate provided with a hard coating film of the present invention, the primer layer contains the acrylic polymer (P), whereby the adhesion between the resin substrate 2 and the hard coating layer 4 is improved. Further, the acrylic polymer is a thermoplastic resin, and it is flexible as compared with a cross-linked polymer and is excellent in followability to deformation of the resin substrate 2, whereby it is considered that a defect is less likely to occur in the durability test.

Further, in the resin substrate provided with a hard coating film of the present invention, the primer layer 3 is provided which contains a silyl group-containing acrylic polymer (α) comprising polymerized units derived from methyl methacrylate (MMA) and polymerized units having a hydrolysable silyl group and/or a SiOH group, whereby the abrasion resistance of the hard coating film will be good, and the weather resistance such as weather resistant adhesion, weather cracking resistance, etc. with respect to the hard coating layer 4 will be also excellent.

That is, the hydrolysable silyl group of the silyl group-containing acrylic polymer (α) contained in the primer layer 3 will react with a reactive terminal group (e.g. a Si-OX group where -OX is a hydroxy group or an alkoxy group) of an organo polysiloxane (T unit) constituting the hard coating layer 4, to form a siloxane bond (-O-Si-O-), whereby the adhesion, particularly the weather resistant adhesion, between the primer layer 3 and the hard coating layer 4, is improved. And, since such a primer layer 3 excellent in the adhesion is provided, it is possible to obtain a hard coating film excellent in the weather resistance, such as weather resistant adhesion, weather cracking resistance, etc. with respect to the hard coating layer 4.

Now, the respective layers to constitute the resin substrate provided with a hard coating film of the present invention will be described in detail.

### (1) Resin substrate

A resin as the material for the resin substrate to be used in the present invention, may, for example, be a thermoplastic resin such as a polycarbonate resin, a polystyrene resin, an aromatic polyester resin, an acrylic resin, a polyester resin, a polyarylate resin, a polycondensate of a halogenated bisphenol A with ethylene glycol, an acrylic urethane resin or a halogenated aryl group-containing acrylic polymer.

Among them, a polycarbonate resin such as an aromatic polycarbonate resin or an acrylic resin such as a polymethyl methacrylate type acrylic resin is preferred, and a polycarbonate resin is particularly preferred. Among polycarbonate resins, a bisphenol A type polycarbonate resin is particularly preferred. Further, the resin substrate may contain two or more of the above thermoplastic resins, or may be a laminated substrate having two or more layers of such resins laminated. Further, the shape of the resin substrate is not particularly limited, and it may be a flat plate or curved. The color of the resin substrate is preferably colorless transparent or colored transparent.

### (2) Primer layer

The resin substrate provided with a hard coating film of the present invention has a primer layer 3 containing an acrylic polymer (P) and a silyl group-containing acrylic polymer (α) as main components, on at least one surface of the resin substrate 2. The primer layer 3 is a layer to be provided to improve the adhesion between the resin substrate 2 and the hard coating layer 4, and it is directly in contact with the resin substrate 2, whereby the adhesion with the resin substrate 2 is secured.

In the resin substrate provided with a hard coating film of the present invention, the primer layer 3 contains, as main components, an acrylic polymer (P) and a silyl group-containing acrylic polymer (α) which will be described hereinafter.

As the acrylic polymer (P) being a main component to constitute the primer layer, a homopolymer or copolymer comprising polymerized units derived from a monomer having a methacrylic group (e.g. a methacrylate), is used. Specifically, a homopolymer or copolymer comprising polymerized units derived from an alkyl methacrylate having a C₁₋₆ alkyl group, which contains from 90 to 100 mol% of polymerized units derived from methyl methacrylate, is used as the acrylic polymer (P).

That is, the acrylic polymer (P) may be one containing from 90 to 100 mol% of polymerized units derived from methyl methacrylate, and it may be a homopolymer comprising polymerized units derived from methyl methacrylate, or a copolymer comprising polymerized units derived from methyl methacrylate and an alkyl methacrylate having a C₂₋₆ alkyl group.

The acrylic polymer (P) to be used in the present invention is preferably a homopolymer obtainable by polymerizing one monomer selected from alkyl methacrylates having a C₁₋₆ alkyl group, including particularly methyl methacrylate, n-butyl methacrylate, tert-butyl methacrylate, ethyl methacrylate, isobutyl methacrylate, etc., or a copolymer of such monomers. It is more preferably a homopolymer of e.g. methyl methacrylate, tert-butyl methacrylate or ethyl methacrylate (i.e. polymethyl methacrylate, poly-tert-butyl methacrylate or polyethyl methacrylate), or a copolymer of methyl methacrylate with one or more monomers selected from n-butyl methacrylate, n-butyl methacrylate and isobutyl methacrylate.

Further, the acrylic polymer (P) has a mass average molecular weight Mw of preferably at least 20,000, more preferably at least 50,000 and preferably at most 1,500,000. The acrylic polymer (P) having a mass average molecular weight in such a range is preferred in that the performance such as the adhesion or strength as the primer layer, is thereby sufficiently obtainable. Here, in this specification, the mass average molecular weight is a value measured by gel permeation chromatography using polystyrene as the standard substance.

Such acrylic polymer (P) is also commercially available, and in the present invention, it is possible to use such a commercial product, for example, one commercially available in the form of a solution as preliminarily dissolved in a suitable solvent, such as Dianal LR269 (tradename, manufactured by Mitsubishi Rayon Co., Ltd., polymethyl methacrylate (PMMA), mass average molecular weight: 100,000) or LR248 (tradename, manufactured by Mitsubishi Rayon Co., Ltd., polymethyl methacrylate (PMMA), mass average molecular weight: 155,000). Further, it is possible to use an acrylic polymer such as Dianal BR80 (tradename, manufactured by Mitsubishi Rayon Co., Ltd., polymethyl methacrylate (PMMA), mass average molecular weight: 90,000), Dianal BR88 (tradename, manufactured by Mitsubishi Rayon Co., Ltd., polymethyl methacrylate (PMMA), mass average molecular weight: 430,000) or M-4003 (tradename, manufactured by Negami Industrial Chemical Co., Ltd., polymethyl methacrylate (PMMA), mass average molecular weight: 700,000 to 1,300,000), by dissolving it in a suitable solvent. Further, it is possible to use two or more of such acrylic polymers in combination as a mixture.

By incorporating the above acrylic polymer (P) in the primer layer 3, it is possible to increase the toughness of the primer layer 3 thereby to improve the impact resistance.

### (Silyl group-containing acrylic polymer (α))

The primer layer 3 contains a silyl group-containing acrylic polymer (α) together with the above-mentioned acrylic polymer (P).

That is, the primer layer of the present invention contains the acrylic polymer (P) and the silyl group-containing acrylic polymer (α) as main components. Here, the primer layer containing the acrylic polymer (P) and the silyl group-containing acrylic polymer (α) as main components means that the total content of the acrylic polymer (P) and the silyl group-containing acrylic polymer (α) in the primer layer is at least 50 mass%.

The silyl group-containing acrylic polymer (α) comprises polymerized units (α1) having a hydrolysable silyl group and/or a SiOH group (hereinafter sometimes referred to as silyl group-containing polymerized units) and polymerized units (α2) derived from methyl methacrylate.

The number of hydrolysable silyl groups contained in each silyl group-containing polymerized unit (α1) is usually one, but may be two or more. The silyl group-containing polymerized unit (α1) is preferably one having a hydrolysable silyl group bonded via a C-Si bond to a hydrocarbon group bonded to an acrylic polymer being the main chain.

The silyl group-containing polymerized unit (α1) can be obtained by polymerization/copolymerization of (A) an acrylic monomer having a hydrolysable silyl group bonded via a C-Si bond (i.e. a silyl group-containing acrylic monomer), and this is taken as a polymerized unit (α1) having a hydrolysable silyl group and/or a SiOH group.

Here, it is considered that in the silyl group-containing polymer (α), a siloxane bond is formed by a reaction of hydrolysable silyl groups and/or SiOH groups contained in this polymer with each other, or by a reaction between a hydrolysable silyl group and/or a SiOH group of the polymer and a hydrolysable silyl group and/or a SiOH group of an organo polysiloxane constituting the after-mentioned hard coating layer. Accordingly, the expression "the primer layer contains a silyl group-containing acrylic polymer which comprises polymerized units having a hydrolysable silyl group and/or a SiOH group" should be understood to include a case where a hydrolysable silyl group and/or a SiOH group forms a siloxane bond.

Further, this silyl group-containing acrylic polymer (α) does not contain polymerized units having an aromatic hydrocarbon group in a side chain. That is, it does not have a structure wherein a monomer having an aromatic hydrocarbon group such as an ultraviolet-absorbing group is copolymerized.

In the primer layer 3, the acrylic polymer (P) and the silyl group-containing acrylic polymer (α) are incorporated so that their mass ratio i.e. the value of (content of the acrylic polymer (P))/(total amount of content of the acrylic polymer (P) and content of the silyl group-containing acrylic polymer (α)) × 100, would be from 50 to 98 mass%. If the value of (content of the acrylic polymer (P))/(total amount of content of the acrylic polymer (P) and content of the silyl group-containing acrylic polymer (α)) × 100, in the primer layer 3, is less than 50 mass%, the toughness of the primer layer 3 tends to be low, and cracking, etc. may be likely to occur in the primer layer 3.

On the other hand, if the value of (content of the acrylic polymer (P))/(total amount of content of the acrylic polymer (P) and content of the silyl group-containing acrylic polymer (α)) × 100, exceeds 98 mass%, siloxane bonds (-O-Si-O-) may not sufficiently be formed between the primer layer 3 and the hard coating layer 4, and it tends to be difficult to sufficiently improve the adhesion with the hard coating layer 4.

### (Synthesis of silyl group-containing acrylic polymer (α))

Such a silyl group-containing acrylic polymer (α) can be obtained by copolymerizing monomer components comprising (A) an acrylic monomer having a hydrolysable silyl group bonded via a C-Si bond (hereinafter sometimes referred to as a silyl group-containing acrylic monomer) and (B) methyl methacrylate.

### (Silyl group-containing acrylic monomer)

As the silyl group-containing acrylic monomer of (A), any monomer may be used without any particular restriction so long as it is a monomer having one or more hydrolysable silyl groups per molecule via a C-Si bond and having one acrylic group or methacrylic group. Particularly preferred is a methacrylate having one hydrolysable silyl group.

The hydrolysable silyl group is a group having a hydrolysable group directly bonded to a silicon atom and having a hydrogen atom in a silyl group (-SiH₃) substituted by a hydrolysable group. Here, as mentioned above, the hydrolysable group is a group which can be converted to a hydroxy group (OH group bonded to a silicon atom) by hydrolysis, and specifically, it may, for example, be an alkoxy group such as a methoxy group, an ethoxy group, a propoxy group, an isopropoxy group, a butoxy group, an isobutoxy group, a sec-butoxy group or a tert-butoxy group, a phenoxy group, an acyloxy group such as an acetyloxy group, an oxime group such as a butanoxime group, an amino group such as an amino group or a methylamino group, or a halogen group such as a chlorine group. From the viewpoint of availability and efficiency in control of the hydrolysis, an alkoxy group such as a methoxy group or an ethoxy group is preferred. As a substituent other than the hydrolysable group, an alkyl group such as a methyl group, an ethyl group, a propyl group, a hexyl group or a decyl group, or a phenyl group, may be exemplified. From the viewpoint of availability, it is preferred to use one wherein the substituent other than the hydrolysable group, is a methyl group or an ethyl group.

The silyl group-containing acrylic monomer having such a hydrolysable silyl group bonded, may, for example, be 3-methacryloxypropyltrimethoxysilane, 3-methacryloxypropylmethyldimethoxysilane, 3-methacryloxypropyldimethylmethoxysilane, 3-methacryloxypropylmethyldiethoxysilane, 3-acryloxypropyltrimethoxysilane or 3-acryloxypropylmethyldimethoxysilane. Among them, from the viewpoint of availability, handling efficiency, cross-linking density, reactivity, etc., 3-methacryloxypropyltrimethoxysilane or 3-methacryloxypropylmethyldimethoxysilane is particularly preferred.

In the silyl group-containing acrylic polymer (α), the proportion of polymerized units (α2) derived from methyl methacrylate (MMA) is from 50 to 95 mol% of all polymerized units constituting the silyl group-containing acrylic polymer (α).

If the proportion of polymerized units derived from methyl methacrylate (MMA) is less than 50 mol%, the compatibility between the silyl group-containing acrylic polymer (α) and the acrylic polymer (P) as the main component of the primer layer is likely to be low. On the other hand, if the proportion of polymerized units derived from methyl methacrylate (MMA) exceeds 95 mol%, the proportion of polymerized units (α1) having a hydrolysable silyl group and/or a SiOH group becomes low, whereby bonding sites with e.g. hydrolysable silyl groups contained in the organosiloxane in the hard coating layer tend to be deficient, and it may not be possible to sufficiently obtain the effect to improve the weather resistant adhesion.

The proportion of polymerized units (α1) having a hydrolysable silyl group and/or a SiOH group is preferably at least 5 mol% and at most 50 mol% of all polymerized units constituting the silyl group-containing acrylic polymer (α).

If the proportion of polymerized units (α1) having a hydrolysable silyl group and/or a SiOH group is less than 5 mol%, no adequate reaction takes place between the hydrolysable silyl group of such polymerized units and a terminal group (e.g. a Si-OX group where -OX is a hydroxyl group or an alkoxy group) of the after-described organo polysiloxane constituting the hard coating layer, whereby no adequate effect to improve the adhesion with the hard coating layer is obtainable. On the other hand, if the proportion of (A) polymerized units (α1) having a hydrolysable silyl group and/or a SiOH group exceeds 50 mol%, unreacted hydrolysable groups tend to remain, whereby post-crosslinking is likely to take place as time passes, thus leading to cracking. Further, the proportion of polymerized units (α2) derived from methyl methacrylate (MMA) necessarily becomes 50 mol% or less, whereby the affinity (compatibility) of the primer layer may be deteriorated.

That is, in the silyl group-containing acrylic polymer (α), the copolymerized composition is preferably such that (A) polymerized units (α1) having a hydrolysable silyl group and/or a SiOH group are from 5 to 50 mol%, and (B) polymerized units (α2) derived from methyl methacrylate (MMA) are from 50 to 95 mol%.

Particularly preferably, the copolymerized composition is such that (A) polymerized units (α1) having a hydrolysable silyl group and/or a SiOH group are from 5 to 40 mol%, and (B) polymerized units (α2) derived from methyl methacrylate (MMA) are from 60 to 95 mol%.

In a case where the silyl group-containing acrylic polymer (α) comprises polymerized units (α2) derived from methyl methacrylate (MMA) and polymerized units having a hydrolysable silyl group and/or a SiOH group i.e. silyl group-containing polymerized units (α1), the molar ratio of polymerized units (α2) derived from methyl methacrylate (MMA) to silyl group-containing polymerized units (α1) contained in the silyl group-containing acrylic polymer (α), is preferably (polymerized units (α2) derived from MMA) : (silyl group-containing polymerized units (α1)) = from 50:50 to 95:5.

If, in the silyl group-containing acrylic polymer (α), the molar ratio of (polymerized units (α2) derived from MMA) : (silyl group-containing polymerized units (α1)), i.e. the value of (polymerized units (α2) derived from MMA)/(silyl group-containing polymerized units (α1)), is less than 50/50, the compatibility may tend to be low between the silyl group-containing acrylic polymer (α) and the acrylic polymer (P) in the primer layer. Further, unreacted hydrolysable groups tend to remain, whereby post-crosslinking is likely to take place as time passes, thus leading to cracking. On the other hand, if the value of (polymerized units (α2) derived from MMA)/(silyl group-containing polymerized units (α1)) exceeds 95/5, no adequate reaction takes place between the hydrolysable silyl group of such polymerized units and a terminal group (e.g. a Si-OX group where - OX is a hydroxyl group or an alkoxy group) of the after-described organo polysiloxane constituting the hard coating layer, whereby no adequate effect to improve the adhesion with the hard coating layer is obtainable.

The molar ratio of polymerized units (α2) derived from methyl methacrylate (MMA) to polymerized units (α1) having a hydrolysable silyl group and/or a SiOH group, is more preferably from 60:40 to 90:10.

The silyl group-containing acrylic polymer (α) can be synthesized by a known method. For example, it can be obtained by adding a radical polymerization initiator selected from a peroxide such as dicumyl peroxide or benzoyl peroxide, and an azo compound such as 2,2'-azobis(isobutylonitrile), to a solution containing (A) a silyl group-containing acrylic monomer and (B) methyl methacrylate, followed by a reaction under heating (at from 40 to 150°C, particularly from 50 to 120°C, for from 1 to 10 hours, particularly from 3 to 8 hours).

A silyl group-containing acrylic polymer (α) as a two-component copolymer of (A) 3-methacryloxypropyltrimethoxysilane as a silyl group-containing acrylic monomer and (B) methyl methacrylate (MMA), is shown by the following compositional formula.

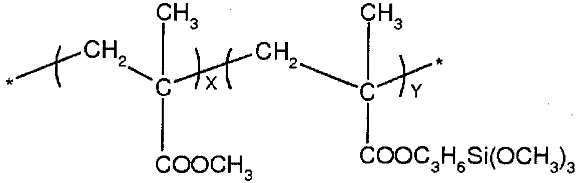

In this compositional formula, X and Y represent the molar ratios of (B) polymerized units derived from methyl methacrylate (MMA) and (A) polymerized units derived from 3-methacryloxypropyltrimethoxysilane, respectively. In the silyl group-containing acrylic polymer (α) as a two-component copolymer, X+Y=100. And, as mentioned above, the molar ratio X of (B) polymerized units derived from methyl methacrylate (MMA) is preferably adjusted to be from 50 to 95. Further, the molar ratio Y of (A) polymerized units derived from 3-methacryloxypropyltrimethoxysilane is preferably from 5 to 50.

The mass average molecular weight Mw of the silyl group-containing acrylic polymer (α) is preferably from 5,000 to 300,000. If the mass average molecular weight of the silyl group-containing acrylic polymer (α) exceeds 300,000, the viscosity of the polymer tends to be excessively high, whereby it tends to be difficult to apply a primer layer-forming composition (which will be described hereinafter) containing it, and there may be a case where a proper film thickness cannot be obtained for the primer layer 3.

On the other hand, if the mass average molecular weight of the silyl group-containing acrylic polymer (α) is less than 5,000, entanglement with the acrylic polymer in the primer layer tends to be weak, whereby the strength of the primer layer 3 may decrease.

Further, such a silyl group-containing acrylic polymer (α) does not contain polymerized units having an aromatic hydrocarbon group in a side chain. That is, it does not have a structure wherein a monomer having an aromatic hydrocarbon group such as an ultraviolet-absorbing group is copolymerized. In a case where the silyl group-containing acrylic polymer (α) contained in the primer layer, has a structure wherein a monomer having an aromatic hydrocarbon group such as an ultraviolet-absorbing group is copolymerized, the reactivity with the organo polysiloxane constituting the hard coating layer tends to be inadequate, whereby no improvement in adhesion, particularly in weather resistant adhesion, may be expected. Further, the affinity to the acrylic polymer (P) to be the main component of the primer layer also tends to be inadequate, whereby no adequate improvement in the abrasion resistance of the hard coating film will be obtainable.

Further, it is preferred that the silyl group-containing acrylic polymer (α) does not contain polymerized units having a hydroxyalkyl group. By making the silyl group-containing acrylic polymer (α) contained in the primer layer to be one not having a hydroxyalkyl group being a hydrophilic group, it is possible to lower the hygroscopicity of the silyl group-containing acrylic polymer (α) and to form a primer layer having deterioration of moisture resistance suppressed.

It is preferred that the primer layer contains an ultraviolet absorber in order to prevent yellowing of the resin substrate. The ultraviolet absorber may be the same as an ultraviolet absorber to be contained in the after-described hard coating layer-forming composition. One of such ultraviolet absorbers may be used alone, or two or more of them may be used in combination. The content of the ultraviolet absorber in the primer layer is preferably from 1 to 50 parts by mass, particularly preferably from 1 to 30 parts by mass, per 100 parts by mass of the resin components such as the acrylic polymer (P) and the silyl group-containing acrylic polymer (α).

The primer layer may further contain a photo-stabilizer, etc. The photo-stabilizer includes, for example, hindered amines; nickel complexes such as nickel bis(octylphenyl) sulfide, nickel complex-3,5-di-tert-butyl-4-hydroxybenzyl phosphoric acid monoethylate, nickel dibutyl dithiocarbamate, etc. Two or more of them may be used in combination. The content of the photo-stabilizer in the primer layer is preferably from 0.01 to 50 parts by mass, particularly preferably from 0.1 to 10 parts by mass, per 100 parts by mass of the resin components such as the acrylic polymer (P) and the silyl group-containing acrylic polymer (α).

In the resin substrate provided with a hard coating film of the present invention, the method for forming the primer layer on at least one surface of the resin substrate, is not particularly limited, but a method may preferably be employed wherein a primer layer-forming composition comprising the above-mentioned acrylic polymer (P), silyl group-containing acrylic polymer (α), ultraviolet absorber and solvent, is applied on the resin substrate, followed by drying.

In the primer layer-forming composition to be used for forming the primer layer, a solvent is usually contained. The solvent is not particularly limited so long as it is a solvent capable of stably dissolving the acrylic polymer (P). Specifically, it may, for example, be a ketone such as acetone, methyl ethyl ketone, methyl isobutyl ketone or cyclohexanone; an ether such as tetrahydrofuran, 1,4-dioxane or 1,2-dimethoxyethane; an ester such as ethyl acetate, butyl acetate or methoxyethyl acetate; an alcohol such as methanol, ethanol, 1-propanol, 2-propanol, 1-butanol, 2-butanol, 2-methyl-1-propanol, 2-methoxyethanol, 2-butoxyethanol, 1-methoxy-2-propanol or diacetone alcohol; a hydrocarbon such as n-hexane, n-heptane, isooctane, benzene, toluene, xylene, gasoline, light oil or kerosene; acetonitrile, nitromethane, or water. Two or more of such solvents may be used in combination.

The amount of the solvent is preferably from 50 to 10,000 parts by mass, particularly preferably from 100 to 10,000 parts by mass, per 100 parts by mass of the resin components such as the acrylic polymer (P), etc. Further, the content of the non-volatile component (the solid content) in the primer layer-forming composition is preferably from 0.5 to 75 mass%, particularly preferably from 1 to 60 mass%, based on the total amount of the composition.

The above primer layer-forming composition may further contain additives such as a leveling agent, a defoaming agent, a viscosity-adjusting agent, etc.

The method for applying the primer layer-forming composition on the resin substrate is not particularly limited, and a spray coating method, a dip coating method, a flow coating method, a spin coating method or a die coating method may, for example, be mentioned. Further, the heating condition for drying is not particularly limited, but it may preferably be at a temperature of from 50 to 140°C for from 5 minutes to 3 hours.

With a primer layer to be formed on a resin substrate by using the above primer layer-forming composition, if the thickness of the primer layer is too thin, it will not be possible to prevent yellowing due to deterioration of weather resistance of the resin substrate itself, thus leading to yellowing of the resin substrate provided with a hard coating film, and the weather cracking resistance and weather resistant adhesion tend to decrease, whereby the weather resistance of the resin substrate provided with a hard coating film will decrease. The thickness of the primer layer is preferably at least 0.1 µm and at most 7 µm, particularly preferably at least 2 µm and at most 5 µm. Here, the thickness means a thickness when the primer layer is formed alone on a substrate such as a resin substrate.

### (3) Hard coating layer

### (Organo polysiloxane)

The hard coating layer to be used for the resin substrate provided with a hard coating film of the present invention, contains a cured product of an organo polysiloxane as a main component. As the organo polysiloxane to form such a cured product, a curable organo polysiloxane may be used without any particular restriction.

Organo polysiloxanes are composed of silicon-containing bond units so-called M units, D units, T units or Q units. Among them, a curable organo polysiloxane is an oligomer-form polymer composed mainly of T units or Q units, and it may be a polymer composed solely of T units, a polymer composed solely of Q units, or a polymer composed of T units and Q units. Further, such polymers may contain a small amount of M units or D units.

In a curable organo polysiloxane, a T unit is a unit having one silicon atom, one hydrogen atom or monovalent organic group bonded to the silicon atom, and three oxygen atoms bonded to other silicon atoms (or functional groups which can be bonded to other silicon atoms). The monovalent organic group bonded to the silicon atom is a monovalent organic group wherein the atom bonded to the silicon atom is a carbon atom. The functional groups which can be bonded to other silicon atoms are hydroxy groups or groups which can be converted to hydroxy groups by hydrolysis (hereinafter referred to as hydrolyzable groups). The sum of the oxygen atoms bonded to other silicon atoms and the functional groups which can be bonded to other silicon atoms, is 3, and T units are classified into three types of units so-called T1, T2 and T3, depending upon the difference in number of the oxygen atoms bonded to other silicon atoms and the functional groups which can be bonded to other silicon atoms. In T1, the number of oxygen atoms bonded to other silicon atoms is 1, in T2, the number of such oxygen atoms is 2, and in T3, the number of such oxygen atoms is 3. In this specification, etc., an oxygen atom bonded to another silicon atom is represented by O*, and a monovalent functional group which can be bonded to another silicon atom is represented by Z.

Here, O* representing an oxygen atom bonded to another silicon atom, is an oxygen atom linking two silicon atoms and is an oxygen atom in a bond represented by Si-O-Si. Accordingly, O* is one present between silicon atoms of two silicon-containing bond units. In other words, O* represents an oxygen atom shared between two silicon atoms of two silicon-containing bond units. In the after-mentioned chemical formulae of the fluorine-containing bond units, O* is represented as bonded to one silicon atom, but this O* is an oxygen atom shared by a silicon atom of another silicon-containing bond unit and does not mean that two silicon-containing bond units are bonded by a bond represented by Si-O*-O*-Si.

The above-mentioned M unit is a unit having three such organic groups and one O*; the D unit is a unit having two such organic groups and two O* (or one O*1 and one Z group); and the Q unit is a unit having no such an organic group and 4 O* (or a total of 4 i.e. from 1 to 3 O* and from 3 to 1 Z group). Each silicon-containing bond unit is formed from a compound having no oxygen atom (O*) bonded to another silicon atom (having only Z groups) (hereinafter sometimes referred to as a monomer). A monomer to form a T unit will be referred to as a T monomer. A monomer to form a M unit, a D unit or a Q unit may likewise be referred to as a M monomer, a D monomer or a Q monomer.

Such a monomer is represented by (R'-)ₐSi(-Z)₄₋ₐ, wherein a is an integer of from 0 to 3, R' is a hydrogen atom or a monovalent organic group, and Z is a hydroxy group or a monovalent functional group which can be bonded to another silicon atom. In this chemical formula, a compound wherein a=3 is the M monomer; a compound wherein a=2 is the D monomer; and a compound wherein a=1 is the T monomer; and a compound wherein a=0, is the Q monomer. In such a monomer, the Z group is usually a hydrolyzable group. Further, in a case where 2 or 3 R' are present (in a case where a is 2 or 3), a plurality of R' may be different. R' is preferably one within the same scope as the after-mentioned preferred R.

A curable organo polysiloxane can be obtained by a reaction to convert some of Z groups in a monomer to O*. In a case where the organo polysiloxane is a copolymer comprising two or more silicon-containing bond units, such a copolymer is usually obtainable from a mixture of the respectively corresponding monomers. In a case where Z groups in a monomer are hydrolyzable groups, the Z groups are converted to hydroxy groups by a hydrolysis reaction, and then, by a dehydration condensation reaction between two hydroxy groups bonded to separate silicon atoms, the two silicon atoms will be linked via an oxygen atom (O*). In the curable organo polysiloxane, hydroxy groups (or non-hydrolyzed Z groups) remain, and at the time of curing of such a curable organo polysiloxane, such hydroxy groups or Z groups are reacted in the same manner as described above, for curing. The cured product of the curable organo polysiloxane is a three dimensionally crosslinked polymer, and a cured product of a curable organo polysiloxane having many T units or Q units will be a cured product having a high crosslink density. At the time of curing, Z groups of a curable organo polysiloxane are converted to O*, but it is considered that some of Z groups (particularly hydroxy groups) will remain, so that the cured product will have hydroxy groups. In a case where a curable organo polysiloxane is cured at a high temperature, there may be a case where no substantial hydroxy groups will remain in the cured product.

In a case where Z groups in a monomer are hydrolyzable groups, such Z groups may, for example, be alkoxy groups, chlorine atoms, acyloxy groups or isocyanate groups. In many cases, as a monomer, a monomer wherein Z groups are alkoxy groups, is used. Alkoxy groups are hydrolyzable groups having a relatively low reactivity as compared with e.g. chlorine atoms, and in a curable organo polysiloxane obtainable by using a monomer wherein Z groups are alkoxy groups, unreacted alkoxy groups are present together with hydroxy groups, as Z groups, in many cases. In a case where Z groups in a monomer are hydrolyzable groups having a relatively high reactivity (such as chlorine atoms), most of Z groups in a curable organo polysiloxane obtainable by using such a monomer will be hydroxy groups. Therefore, in a usual curable organo polysiloxane, Z groups in the respective units constituting it are hydroxy groups, or hydroxy groups and alkoxy groups, in many cases.

In the present invention, among such curable organo polysiloxanes, a curable organo polysiloxane having T units as the main silicon-containing bond units is preferably used. Hereinafter, a curable organo polysiloxane will be referred to simply as an organo polysiloxane unless otherwise specified. Here, in this specification, an ograno polysiloxane having T units as the main constituting units (hereinafter referred to as "organo polysiloxane (T)" as the case requires) means an organo polysiloxane wherein the proportion in number of T units is from 50 to 100% to the total number of M units, D units, T units and Q units, and in the present invention, it is more preferred to use an organo polysiloxane wherein the proportion in number of T units is from 70 to 100%, particularly preferred to use an organo polysiloxane wherein the proportion in number of T units is from 90 to 100%. Further, as other units to be contained in a small amount in addition to T units, D units and Q units are preferred, and Q units are particularly preferred.

That is, in the present invention, among these curable organo polysiloxanes, an organo polysiloxane which is composed solely of T units and Q units, wherein their ratio in number is T : Q = from 90 to 100 : from 10 to 0, is particularly preferably used.

Further, the proportions in number of M units, D units, T units and Q units in an organo polysiloxane can be calculated from values of peak area ratios by ²⁹Si-NMR.

The organo polysiloxane (T) to be preferably used in the present invention, is an organo polysiloxane having T units represented by the following T1 to T3.

T1: R-Si(-OX)₂(-O*-)

T2: R-Si(-OX)(-O*-)₂

T3: R-Si(-O*-)₃

(wherein R is a hydrogen atom or a C₁₋₁₀ substituted or unsubstituted monovalent organic group, X is a hydrogen atom or a C₁₋₆ alkyl group, and O* is an oxygen atom linking two silicon atoms.)

In the above chemical formulae, R is not limited to one type, and each of T1, T2 and T3 may contain plural types of R. Further, in the above chemical formulae, -OX is a hydroxy group or an alkoxy group. Between T1 and T2, -OX may be the same or different. Two -OX in T1 may be different, and for example, one of them may be a hydroxy group and the other may be an alkoxy group. Further, when the two -OX are alkoxy groups, such alkoxy groups may be different alkoxy groups. However, as described hereinafter, the two alkoxy groups are usually the same alkoxy groups.

Further, a T unit having three -OX only without having an oxygen atom (O*) linking two silicon atoms, will be hereinafter referred to as T0. Actually, T0 corresponds to a non-reacted T monomer contained in the organo polysiloxane and is not a silicon-containing bond unit. Such a T0 is measured in the same manner as T1 to T3 in the analysis of T1 to T3 units.

T0 to T3 in the organo polysiloxane can be analyzed by measuring the bonding states of silicon atoms in the organo polysiloxane by a nuclear magnetic resonance analysis (²⁹Si-NMR). The ratios in number of T0 to T3 are obtained from the peak area ratios in ²⁹Si-NMR. -OX in the organo polysiloxane molecule can be analyzed by an infrared absorption analysis. The ratios in number of hydroxy groups and alkoxy groups bonded to silicon atoms can be obtained from the peak area ratios of the infrared absorption peaks of the two. The weight average molecular weight Mw, the number average molecular weight Mn and the dispersion degree Mw/Mn of the organo polysiloxane are values measured by using polystyrene as a standard substance by a gel permeation chromatography method. Such properties of an organo polysiloxane are not meant for the properties of a single molecule, but are obtained as average properties of the respective molecules.

A plurality of T1, T2 or T3 present in one molecule of the organo polysiloxane (T) may be two or more different types. For example, there may be two or more T2 different in R. Such an organo polysiloxane is obtainable from a mixture of two or more T monomers. For example, it is considered that in an organo polysiloxane obtainable from a mixture of two or more T monomers different in R, two or more T1, T2 and T3, respectively, different in R are present. The ratio in number of different R in an organo polysiloxane obtained from a mixture of a plurality of T monomers different in R, reflects the compositional ratio in the mixture of the T monomers different in R. However, the ratio in number of units different in R in each of T1, T2 and T3 does not necessarily reflect the compositional ratio in the mixture of the T monomers different in R, because, for example, even if three -OX in the T monomers are the same, the reactivities of the T monomers, T1 and T2 may be different due to the difference in R.

The organo polysiloxane (T) is preferably produced from at least one type of T monomers represented by R-Si(-OY)₃. In this formula, R is the same as the above-described R, and Y is a C₁₋₆ alkyl group. Y may be not only an unsubstituted alkyl group but also a substituted alkyl group such as an alkoxy-substituted alkyl group. Three Y in one molecule may be different. However, the three Y are usually the same alkyl group. Y is preferably an alkyl group having from 1 to 4 carbon atoms, more preferably 1 or 2 carbon atoms. Specifically, Y may, for example, be a methyl group, an ethyl group, a n-propyl group, a n-butyl group, a t-butyl group or a 2-methoxyethyl group.

R is a hydrogen atom or a C₁₋₁₀ substituted or unsubstituted monovalent organic group. The organic group is meant for an organic group wherein, as mentioned above, atoms bonded to silicon atoms are carbon atoms.

The unsubstituted monovalent organic group may be a hydrocarbon group such as an alkyl group, an alkenyl group, an alkynyl group, an cycloalkyl group, an aryl group or an aralkyl group. Such a hydrocarbon group is preferably a C₁₋₁₀ alkyl group, a C₂₋₁₀ alkenyl or alkynyl group, a C₅ or C₆ cycloalkyl group, a C₆₋₁₀ aryl group or a C₇₋₁₀ aralkyl group. Specifically, a methyl group, an ethyl group, a n-propyl group, a n-butyl group, an i-butyl group, a t-butyl group, a hexyl group, an octyl group, a decyl group, a vinyl group, an allyl group, a cyclohexyl group, a phenyl group, a benzyl group or a phenethyl group, may, for example, be mentioned.

The substituted monovalent organic group may, for example, be a hydrocarbon group having a hydrogen atom of a ring of e.g. a cycloalkyl group, an aryl group or an aralkyl group substituted by an alkyl group, or a substituted organic group having a hydrogen atom of the above mentioned hydrocarbon group substituted by e.g. a halogen atom, a functional group or a functional group-containing organic group. As the functional group, a hydroxy group, a mercapto group, a carboxy group, an epoxy group, an amino group or an cyano group may, for example, be preferred. As a halogen atom-substituted organic group, an alkyl group having a chlorine atom or a fluorine atom, such as a chloroalkyl group or a polyfluoroalkyl group, is preferred. As the functional group-containing organic group, an alkoxy group, an acyl group, an acyloxy group, an alkoxycarbonyl group, a glycidyl group, an epoxycyclohexyl group, an alkylamino group, a dialkylamino group, an arylamino group or an N-aminoalkylsubstituted aminoalkyl group is, for example, preferred. Particularly preferred is a chlorine atom, a mercapto group, an epoxy group, an amino group, an acryloyloxy group, a methacryloyloxy group, a glycidyl group, an alkylamino group or an N-aminoalkyl-substituted aminoalkyl group. A T monomer having a substituted organic group which is substituted by e.g. a functional group or a functional group-containing organic group, includes a compound in a category so-called a silane coupling agent.

As specific examples of the substituted organic group, the following organic groups may be mentioned: a 3-chloropropyl group, a 3,3,3-trifluoropropyl group, a 3-mercaptopropyl group, a p-mercaptomethylphenylethyl group, a 3-acryloyloxypropyl group, a 3-methacryloyloxypropyl group, a 3-glycidoxypropyl group, a 2-(3,4-epoxycyclohexyl)ethyl group, a 3-aminopropyl group, an N-phenyl-3-aminopropyl group, an N-(2-aminoethyl)-3-aminopropyl group, and a 2-cyanoethyl group.

As the above R, a particularly preferred monovalent organic group is a C₁₋₄ alkyl group. The organo polysiloxane (T) is preferably an organo polysiloxane which is obtainable by using one or more of T monomers each having a C₁₋₄ alkyl group. Further, the organo polysiloxane (T) is also preferably an organo polysiloxane which is obtainable by using at least one of T monomers each having a C₁₋₄ alkyl group and a small amount of another T monomer. The proportion of such another T monomer is preferably at most 30 mol%, particularly preferably at most 15 mol%, based on the total amount of T monomers. As such another T monomer, preferred is a T monomer having a substituted organic group which is substituted by a functional group or a functional group-containing organic group, in a category so-called a silane coupling agent.

Specifically, a T monomer having a C₁₋₄ alkyl group may, for example, be methyltrimethoxysilane, methyltriethoxysilane, methyltripropoxysilane, ethyltrimethoxysilane or ethyltriethoxysilane. Particularly preferred is methyltrimethoxysilane or ethyltrimethoxysilane. As specific examples of a T monomer having a substituted organic group or the like, the following compounds may, for example, be mentioned.

Vinyltrimethoxysilane, vinyltriethoxysilane, phenyltrimethoxysilane, phenyltriethoxysilane, 3-chloropropyltrimethoxysilane, 3,3,3-trifluoropropyltrimethoxysilane, 3-mercaptopropyltrimethoxysilane, 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane, 3-acryloyloxypropyltrimethoxysilane, 3-methacryloyloxypropyltrimethoxysilane, 3-aminopropyltrimethoxysilane, 3-aminopropyltriethoxysilane, N-(2-aminoethyl)-3-aminopropyltrimethoxysilane and 3-cyanoethyltrimethoxysilane.

A T monomer represented by (R'-)ₐSi(-Z)₄₋ₐ (a=3) other than the T monomer represented by R-Si(-OY)₃, may, for example, be methyltrichlorosilane, ethyltrichlorosilane, phenyltrichlorosilane, 3-glycidoxypropyltrichlorosilane, methyltriacetoxysilane or ethyltriacetoxysilane.

In a D monomer represented by (R'-)ₐSi(-Z)₄₋ₐ (a=2), the two R' may be the same or different. In a case where they are the same, they are preferably a C₁₋₄ alkyl group. In a case where they are different, it is preferred that one R' is a C₁₋₄ alkyl group, and the other R' is a substituted organic group which is substituted by the above mentioned functional group or functional group-organic group. Further, the Z group is preferably a C₁₋₄ alkoxy group, an acetoxy group or the like. As the D monomer, the following compounds may, for example, be mentioned.

Dimethyldimethoxysilane, dimethyldiethoxysilane, vinylmethyldiethoxysilane, vinylmethyldiethoxysilane, phenylmethyldimethoxysilane, phenylmethyldiacetoxysilane, 3-chloropropylmethyldimethoxysilane, 3,3,3-trifluoropropylmethyldimethoxysilane, 3-mercaptopropylmethyldiethoxysilane, 3-acryloyloxypropylmethyldimethoxysilane, 3-methacryloyloxypropylmethyldimethoxysilane, 3-aminopropylmethyldimethoxysilane, 3-aminopropylmethyldiethoxysilane, N-(2-aminoethyl)-3-aminopropylmethyldimethoxysilane and 3-cyanoethylmethyldimethoxysilane.

In a Q monomer represented by (R'-)ₐSi(-Z)₄₋ₐ (a=0), the four Z groups may be different, but they are usually the same. The Z group is preferably a C₁₋₄ alkoxy group, particularly preferably a methoxy group or an ethoxy group. As the Q monomer, the following compounds may, for example, be mentioned.

Tetramethoxysilane, tetraethoxysilane, tetra n-propoxysilane, tetra n-butoxysilane, tetra sec-butoxysilane and tetra t-butoxysilane.

The organo polysiloxane (T) to be used in the present invention can be obtained by subjecting the above T monomer or the like to partial hydrolytic condensation. Usually, this reaction is carried out by heating the T monomer or the like and water in a solvent. It is preferred that a catalyst is present in the reaction system. The desired organo polysiloxane can be produced by adjusting the reaction conditions such as the type of the monomer, the amount of water, the heating temperature, the type and amount of the catalyst, the reaction time, etc. In some cases, a commercially available organo polysiloxane may be used as it is as the desired organo polysiloxane, or the desired organo polysiloxane may be produced by using a commercially available organo polysiloxane.

The above catalyst is preferably an acid catalyst. The acid catalyst may, for example, be an inorganic acid such as hydrochloric acid, sulfuric acid, nitric acid, phosphoric acid, nitrous acid, perchloric acid or sulfamic acid, or an organic acid such as formic acid, acetic acid, propionic acid, butyric acid, oxalic acid, succinic acid, maleic acid, lactic acid or p-toluenesulfonic acid. Particularly preferred is acetic acid. The above solvent is preferably a hydrophilic organic solvent, particularly preferably an alcohol type solvent. The alcohol type solvent may, for example, be methanol, ethanol, 1-propanol, 2-propanol, 1-butanol, 2-butanol, 2-methyl-1-propanol, 2-ethoxyethanol, diacetone alcohol or 2-buthoxyethanol. With respect to the reaction temperature, in a case where a catalyst is present, the reaction can be made at room temperature. Usually, within a reaction temperature of from 20 to 80°C, a suitable temperature is selected for use depending upon the particular purpose.

The hydrolytic condensation reaction is a reaction whereby T1 is formed from T0 (T monomer), T2 is formed from T1, and T3 is formed from T2. The reaction rate is considered to be low in the order of the condensation reaction whereby T1 is formed from T0 having at least one hydrolyzable group converted to a hydroxy group, a condensation reaction whereby T2 is formed from T1 wherein at least one of the two -OX is hydroxy group, and a condensation reaction whereby T3 is formed from T2 wherein -OX is a hydroxy group. Also in consideration of a hydrolytic reaction of a hydrolyzable group, it is considered that the peak of the amount of each unit to be present moves from T0 to T3 as the reaction proceeds. In a case where the reaction conditions are relatively mild, it is considered that the movement of the peak of the amount present proceeds relatively steadily. Among organo polysiloxanes (T) to be used in the present invention, the organo polysiloxane (a) is an organo polysiloxane having a relatively high molecular weight wherein the amount of T0 or T1 present is small, and the ratio in the amount present of T2 to T3 is in a specific range, and such an organo polysiloxane can be produced by selecting relatively mild reaction conditions.

The reactivity for the above condensation reaction changes depending on R, and if R differs, the reactivity of a hydroxy group also changes. Usually, as R becomes small (for example, in a case where R is an alkyl group, as the number of carbon atoms in the alkyl group becomes small), the reactivity of a hydroxy group becomes high. Accordingly, it is preferred to select the T monomer taking into consideration the relation between the reactivity of the hydrolyzable group and the reactivity of the hydroxy group.

Further, the rate of the hydrolysis reaction of a hydrolyzable group to a hydroxy group changes depending upon the type of the hydrolyzable group, and it is preferred to take into consideration the relation with the rate of the condensation reaction. For example, in a case where an OX group in T2 is an alkoxy group, if its hydrolysis reaction rate is too slow, T2 wherein the OX group is a hydroxy group becomes less. Likewise, if the hydrolysis reaction rate is too slow, T1 wherein the OX group is a hydroxy group becomes less. Therefore, it becomes difficult to obtain an organo polysiloxane wherein the ratio in amount of the hydroxy group to the alkoxy group is high. Accordingly, the alkoxy group being an OX group is preferably an alkoxy group having a high reactivity i.e. an alkoxy group having a small number of carbon atoms, and a methoxy group is most preferred. In a case where the reactivity of a hydrolyzable group is sufficiently high, it is possible to obtain an organo polysiloxane having a high proportion of hydroxy groups from an organo polysiloxane having a high proportion of hydrolyzable groups without proceeding with the condensation reaction so much.

To the hard coating layer-forming composition to be used in the present invention, one of curable organo polysiloxanes (T) thus obtainable may be incorporated alone, or two or more of them may be incorporated in combination.

Further, for the resin substrate provided with a hard coating film of the present invention, a composition (hereinafter referred to as a "hard coating layer-forming composition") is prepared and used, that contains materials before curing of components to constitute a hard coating layer, which are commonly used in order to form a hard coating layer. By incorporating a curable organo polysiloxane (T) to be preferably used in the present invention to such a hard coating layer-forming composition in the production process, it becomes possible to have its cured product contained in the hard coating layer thereby obtainable.

As a combination of organo polysiloxanes (T) particularly preferred from the viewpoint of abrasion resistance, a combination of organo polysiloxane (a) and organo polysiloxane (b) will be described below, but curable organo polysiloxanes useful in the present invention are not limited to such a combination. Further, organo polysiloxane (a) and organo polysiloxane (b) may, each independently, be used as an organo polysiloxane (T) in the present invention.

### (Organo polysiloxane (a))

An organo polysiloxane (a) contains the respective units T1 to T3 in a ratio of T1:T2:T3=0-5:15-40:55-85 and in a ratio of T3/T2=1.5-4.0. Further, with respect to OX groups in the organo polysiloxane (a), the ratio of the number (B) of them being hydroxy groups to the number (A) of them being alkoxy groups i.e. (B)/(A) is at least 12.0 on molecular average. And, the mass average molecular weight of the organo polysiloxane (a) is from 800 to 8,000. Further, the organo polysiloxane (a) does not substantially contain T0 as a T monomer.

With respect to the proportions of the respective units T1, T2 and T3 constituting the organo polysiloxane (a), (T2+T3)/(T1+T2+T3) is preferably within a range of from 0.85 to 1.00, more preferably at least 0.90 to less than 1.00. Further, with respect to T3/T2, a preferred range is from 2.0 to 4.0.

By adjusting the proportions of T1, T2 and T3 constituting the organo polysiloxane (a) to be in such ranges in an average composition of the respective molecules, it becomes possible that when the organo polysiloxane (a) is combined with the after-described organo polysiloxane (b) to form a hard coating-layer forming composition of the present invention, the abrasion resistance of the finally obtainable hard coating layer can be improved.

The ratio of (B)/(A) in the organo polysiloxane (a) is a parameter indicating the condensation reactivity, and if this value becomes large, i.e. if the proportion of hydroxy groups becomes high as compared with alkoxy groups, the curing reaction at the time of forming a cured film will be accelerated when the organo polysiloxane (a) and the organo polysiloxane (b) are combined and used as a hard coating layer-forming composition. Further, alkoxy groups which remain to be unreacted at the time of forming the cured film, are likely to lead to deterioration of the abrasion resistance of the finally obtainable hard coating layer and may cause microcracks if post curing proceeds, and therefore, the proportion of hydroxy groups should better be high as compared with alkoxy groups. The ratio of (B)/(A) in the organo polysiloxane (a) is at least 12.0, preferably at least 16.0. Further, (A) may be 0.

If the value of (B)/(A) is less than 12.0, the proportion of hydroxy groups tends to be too low as compared with alkoxy groups, whereby the effect to accelerate the curing reaction tends to be hardly obtainable, and by the influence of alkoxy groups, deterioration of the abrasion resistance is likely to be led, or post curing is likely to proceed to cause micro cracking. That is, if the value of (B)/(A) is less than 12.0, at the time of forming a hard coating layer, a part of the organo polysiloxane (a) is likely to be included in the three dimensional crosslink structure (network) formed by the curing reaction of the organo polysiloxane (a) and the organo polysiloxane (b) and is likely to bleed out, thus causing problems such that the crosslinking density decreases and the abrasion resistance cannot be obtained, and that the curing tends to hardly proceed.

The mass average molecular weight of the organo polysiloxane (a) is from 800 to 8,000, preferably from 1,000 to 6,000. As the mass average molecular weight of the ograno polysiloxane (a) is within this range, it is possible that when the ograno polysiloxane (a) and the organo polysiloxane (b) are used in combination for a hard coating layer-forming composition of the present invention, it is possible to improve the abrasion resistance of the finally obtainable hard coating layer.

In the present invention, in order to obtain an organo polysiloxane (a) to be used for a hard coating layer-forming composition to form a hard coating layer excellent particularly in the abrasion resistance, it is preferred to use a raw material hydrolyzable silane compound wherein at least 70 mass% of all T monomers is a methyl trialkoxysilane, wherein the number of carbon atoms of the alkoxy groups is from 1 to 4. However, for the purpose of improving the adhesion or providing functions such as hydrophilicity, water repellency, etc. T monomers other than the methyl trialkoxysilane may be used in combination in a small amount.

As a method for producing the organo polysiloxane (a), as mentioned above, T monomer or the like is subjected to a hydrolytic condensation reaction in a solvent in the presence of an acid catalyst. Here, water required for the hydrolysis is usually from 1 to 10 equivalents, preferably from 1.5 to 7 equivalents, more preferably from 3 to 5 equivalents, per 1 equivalent of the monomer. The hydrolysis and condensation of the monomer can be carried out in a reaction system where a colloidal silica is present as described hereinafter, and in a case where an aqueous dispersion type colloidal silica is used as such a colloidal silica, water is supplied from such an aqueous dispersion. The amount of the acid catalyst to be used is preferably from 0.1 to 50 parts by mass, particularly preferably from 1 to 20 parts by mass, per 100 parts by mass of the monomer. As the solvent, the above-mentioned alcohol type solvent is preferred, and specifically, methanol, ethanol, 2-propanol, 1-butanol or 2-butanol is particularly preferred from such a viewpoint that the solubility of the obtainable organo polysiloxane (a) will be good.

Usually, the reaction temperature is from 20 to 40°C, and the reaction time is from 1 hour to a few days. The hydrolytic condensation reaction of the monomer is an exothermic reaction, but the temperature of the system should better not exceed 60°C. It is preferred that under such conditions, the hydrolysis reaction is sufficiently proceeded, and then for the stability of the obtainable organo polysiloxane, the condensation reaction is proceeded at a temperature of from 40 to 80°C for from 1 hour to a few days.

The organo polysiloxane (a) may also be produced from a commercially available organo polysiloxane. A commercially available organo polysiloxane is usually an organo polysiloxane wherein the proportion of alkoxy groups is high as compared with hydroxy groups, and accordingly, it is preferred that by using a commercially available organo polysiloxane similar to the desired organo polysiloxane (a) except for the ratio of (B)/(A), the proportion of hydroxy groups is increased by a hydrolysis reaction to produce the organo polysiloxane (a).

A commercially available organo polysiloxane useful as a raw material for the organo polysiloxane (a), may, for example, be the following organo polysiloxane which is a partial hydrolytic condensation product of methyltrimethoxysilane. Here, the symbol "ND" means that when the peak area ratio of ²⁹Si-NMR is measured by means of nuclear magnetic resonance analyzer ECP400 (tradename) manufactured by JEOL Ltd., the result is not more than a detectable level (the same applies hereinafter).

Methyl type silicone resin KR-220L (tradename, manufactured by Shin-Etsu Chemical Co., Ltd.); T0:T1:T2:T3=ND:ND:28:72, Si-OH/SiO-CH₃=11.7, weight average molecular weight of Mw=4,720, number average molecular weight Mn=1,200, Mw/Mn=3.93.

Methyl type silicone resin KR-500, (tradename, manufactured by Shin-Etsu Chemical Co., Ltd.); T0:T1:T2:T3=ND:15:58:27, the peak attributable to the Si-OH group is not detected by FT-IR, substantially only SiO-CH₃ is present. Mw=1,240, Mn=700, Mw/Mn=1.77.

In a case where an organo polysiloxane (a) is produced from such a commercially available organo polysiloxane, it is preferred to subject the commercially available organo polysiloxane to mainly the hydrolysis of alkoxy groups in the presence of an acid catalyst. For example, a method may be mentioned wherein to the commercially available organo polysiloxane, a solvent in an amount of from 0 to 10 times (by mass) is added and thoroughly mixed, and then an aqueous acid solution at a concentration of from about 0.1 to 70 mass% is added, followed by stirring at a temperature of from 15 to 80°C, preferably from 20 to 70°C, for from 1 to 24 hours. As the solvent to be used, water may be used, or the above mentioned alcohol type solvent having water added thereto, may also be used.

### (Organo polysiloxane (b))

The organo polysiloxane (b) to be used in combination with the organo polysiloxane (a) for the hard coating layer-forming composition to be used in the present invention, is an organo polysiloxane having a mass average molecular weight between 1/10 and 1/1.5 of the mass average molecular weight of the organo polysiloxane (a). The organo polysiloxane (b) is an organo polysiloxane having a mass average molecular weight smaller than the organo polysiloxane (a) and has the above-described units T1 to T3. The ratio in number of T1 :T2:T3, the ratio of T3/T2 and the ratio of (B)/(A) are not particularly limited.

The mass average molecular weight of the organo polysiloxane (b) is preferably between 1/8 and 1/1.5 of the mass average molecular weight of the organo polysiloxane (a) to be combined. If the mass average molecular weight of the organo polysiloxane (b) exceeds 1/1.5 of the mass average molecular weight of the organo polysiloxane (a), i.e. if the mass average molecular weight of the organo polysiloxane (a) is less than 1.5 times the mass average molecular weight of the organo polysiloxane (b), the toughness of the finally obtainable hard coating layer tends to be low, and such becomes a cause for cracking. Further, if the mass average molecular weight of the organo polysiloxane (b) is less than 1/10 of the mass average molecular weight of the organo polysiloxane (a), i.e. if the mass average molecular weight of the organo polysiloxane (a) exceeds ten times the mass average molecular weight of the organo polysiloxane (b), the abrasion resistance of the finally obtainable hard coating layer tends to be low, whereby it is possible that it becomes difficult to obtain a hard coating layer having sufficient abrasion resistance.

A more preferred organo polysiloxane (b) is an organo polysiloxane wherein the respective silicon-containing bond units represented by T0, T1, T2 and T3 are within a range of T0:T1:T2:T3=0-5:0-50:5-70:10-90, in a ratio by number of such units. The proportions of T0 and T1 in the organo polysiloxane (b) being large usually indicates that at the time of producing such an organo polysiloxane, the hydrolytic reaction or the condensation reaction of the raw material monomer was insufficient. In the organo polysiloxane (b), if the proportions of T0 and T1 are large, at the time of heat curing to form a cured film by using a hard coating layer-forming composition comprising it and the organo polysiloxane (a), cracking tends to increase. Further, usually, if the condensation reaction of the raw material monomer is proceeded too much at the time of producing an organo polysiloxane, the proportion of T3 in the obtainable organo polysiloxane tends to be high. In the organo polysiloxane (b), if the proportion of T3 becomes higher than necessary, a proper crosslinking reaction tends to be difficult at the time of heat curing to form a cured film by using the hard coating layer-forming composition comprising it and the organo polysiloxane (a), whereby the cured film may not be formed, or it becomes difficult to finally obtain a hard coating layer having sufficient abrasion resistance.

The organo polysiloxane (b) can be produced from a T monomer or the like in the same manner as the organo polysiloxane (a). Further, a commercially available ograno polysiloxane may be used as it is, as the organo polysiloxane (b). The following organo polysiloxanes may, for example, be mentioned as commercially available organo polysiloxanes which can be used as the organo polysiloxane (b). Here, the symbol "trace" means that when the peak area ratio of ²⁹Si-NMR is measured by means of a nuclear magnetic resonance analyzer ECP400 (tradename) manufactured by JEOL Ltd., it is at least 0.01 and at most 0.25 (the same applies hereinafter).

TOSGUARD 510 (tradename, manufactured by Momentive Performance Materials, Inc.); molecular weight: Mn=1,370, Mw=1,380, Mw/Mn=1.01. Number of T units: (total amount of the respective numbers of M units, D units and Q units)=at least 99.9:ND. T0:T1:T2:T3=ND:2:36:62.

KP851 (tradename: manufactured by Shin-Etsu Chemical Co., Ltd.); molecular weight: Mn=1,390, Mw=1,400, Mw/Mn=1.01. Number of T units: (total amount of the respective numbers of M units, D units and Q units)=at least 99.9:ND.
T0:T1:T2:T3=trace:21:58:21.

Here, in the hard coating layer-forming composition to be used in the present invention which will be described below, the ratio in content of the organo polysiloxane (b) to the organo polysiloxane (a) is preferably from 1.5 to 30 times, more preferably from 2 to 15 times, by mass ratio. When the hard coating layer-forming composition to be used in the present invention contains both in such a ratio, the three dimensional crosslinking structure of organo polysiloxanes formed by the curing reaction will be one having the organo polysiloxane component (a) partially incorporated in the three dimensional crosslinking structure composed mainly of the organo polysiloxane (b), whereby the abrasion resistance of the finally obtainable hard coating layer will be good.

The hard coating layer-forming composition to be used in the present invention comprises the above curable ograno polysiloxane, preferably the organo polysiloxane (T). The content of the organo polysiloxane in the hard coating layer-forming composition is preferably from 50 to 100 mass%, more preferably from 60 to 95 mass%, based on the total amount of the composition excluding the solvent (hereinafter referred to as "the nonvolatile component" as the case requires). In the present invention, the amount of the nonvolatile component is measured on the basis of a change in mass after being left at 150°C for 45 minutes.

In the present invention, the hard coating layer-forming composition containing an organo polysiloxane as the main component means that the organo polysiloxane is contained in an amount of at least 50% based on the total amount of the respective components of the hard coating layer-forming composition excluding a solvent.

### (Optional components)

The hard coating layer-forming composition to be used in the present invention may contain various additives in addition to the above organo polysiloxane. For example, in order to further improve the abrasion resistance of the had coating layer of a resin substrate having the hard coating layer of the present invention, a hard coating layer-forming composition containing fine silica particles is preferred. For such a purpose, it is preferred to incorporate colloidal silica to the hard coating layer-forming composition. Here, the colloidal silica is meant for one having fine silica particles dispersed in water or an organic solvent such as methanol, ethanol, isobutanol or propylene glycol monomethyl ether.

Otherwise, fine silica particles may be incorporated to the raw material monomer in a step of producing the organo polysiloxane. By producing the organo polysiloxane in a reaction system containing colloidal silica, it is possible to obtain the organo polysiloxane containing fine silica particles. For example, by adding a T monomer and, if required, water or an acid catalyst, to colloidal silica, it is possible to produce the organo polysiloxane as described above in the dispersion of colloidal silica. By using the organo polysiloxane thus obtained, it is possible to produce a hard coating layer-forming composition to be used in the present invention containing fine silica particles.

The fine silica particles to be used for the hard coating layer-forming composition to be used in the present invention preferably has an average particle size (BET method) of from 1 to 100 nm. If the average particle size exceeds 100 nm, the particles will diffusely reflect light, whereby the haze value of the obtainable hard coating layer tends to be large, such being undesirable from the viewpoint of the optical quality. Further, the average particle size is particularly preferably from 5 to 40 nm, whereby the transparency of the hard coating layer can be maintained while imparting the abrasion resistance to the hard coating layer. Further, the colloidal silica may be used in either a water-dispersed type or an organic solvent-dispersed type, but it is preferred to use a water-dispersed type. Further, it is particularly preferred to use colloidal silica dispersed in an acidic aqueous solution. Further, to the colloidal silica, fine inorganic particles other than fine silica particles, such as alumina sol, titanium sol or ceria sol, may be incorporated.

The content of the fine silica particles in the hard coating layer-forming composition to be used in the present invention is preferably from 1 to 50 mass%, more preferably from 5 to 40 mass%, based on the total amount of the composition (the non-volatile component) excluding the solvent. If the content of the fine silica particles in the non-volatile component in the hard coating layer-forming composition to be used in the present invention is less than 1 mass%, adequate abrasion resistance may not be secured in the obtainable hard coating layer, and if the content exceeds 50 mass%, the proportion of the organo polysiloxane in the non-volatile component, tends to be too low, whereby it tends to be difficult to form a cured film by heat curing of the organo polysiloxane, cracking is likely to be formed in the finally obtainable hard coating layer, or aggregation of fine silica particles is likely to take place to deteriorate the transparency of the hard coating layer.

The hard coating layer-forming composition to be used in the present invention may further contain an additive such as a defoaming agent or a viscosity-adjusting agent for the purpose of improving the coating properties on a resin substrate, may contain an additive such as an adhesion-imparting agent for the purpose of improving the adhesion to the primer layer, or may contain a leveling agent as an additive for the purpose of improving the coating properties and the smoothness of the coating film thereby obtainable. The amounts of such additives to be incorporated are preferably from 0.01 to 2 parts by mass of each additive, based on 100 parts by mass of the organo polysiloxane. Further, the hard coating layer-forming composition to be used in the present invention may contain a dye, a pigment, a filler, etc. within a range not to impair the purpose of the present invention.

The hard coating layer-forming composition to be used in the present invention may further contain a curing catalyst. The curing catalyst may, for example, be an alkali metal salt such as a lithium salt, a sodium salt or a potassium salt, of an aliphatic carboxylic acid (such as formic acid, acetic acid, propionic acid, butyric acid, lactic acid, tartaric acid or succinic acid); a quaternary ammonium salt such as a benzyltrimethylammonium salt, a tetramethylammonium salt or tetraethylammonium salt; a metal alkoxide or chelate of e.g. aluminum, titanium or cerium; ammonium perchlorate, ammonium chloride, ammonium sulfate, sodium acetate, an imidazole or its salt, ammonium trifluoromethyl sulfonate, or bis(trifluoromethylsulfonyl)bromomethyl ammonium. Here, the amount of the curing catalyst to be incorporated is preferably from 0.01 to 10 parts by mass, more preferably from 0.1 to 5 parts by mass, per 100 parts by mass of the organo polysiloxane. If the content of the curing catalyst is less than 0.01 part by mass, a sufficient curing rate tends to be hardly obtainable, and if it exceeds 10 parts by mass, the storage stability of the hard coating layer-forming composition tends to be deteriorated, or precipitates are likely to be formed.

Further, the hard coating layer-forming composition to be used in the present invention preferably further contains an ultraviolet absorber to prevent yellowing of the resin substrate. Such an ultraviolet absorber may, for example, be a benzophenone type ultraviolet absorber, a benzotriazole type ultraviolet absorber, a benzimidazole type ultraviolet absorber, a cyanoacrylate type ultraviolet absorber, a salicylate type ultraviolet absorber, a benzylidenemalonate type ultraviolet absorber or a triazine type ultraviolet absorber. One type of such ultraviolet absorbers may be used alone, or two or more types may be used in combination. Further, in order to prevent.bleeding out of such an ultraviolet absorber from the finally obtainable hard coating layer, an ultraviolet absorber having a trialkoxysilyl group may be used. The ultraviolet absorber having a trialkoxysilyl group will be converted to a hydroxy group by a hydrolytic reaction at the time of forming a cured film by heat curing of the organo polysiloxane, and then incorporated in the cured film by a dehydration condensation reaction, whereby it is possible to prevent bleeding out of the ultraviolet absorber from the hard coating layer. Specifically, such a trialkoxysilyl group may, for example, be a trimethoxysilyl group or a triethoxysilyl group. The content of the ultraviolet absorber in the hard coating layer-forming composition is preferably from 0.1 to 50 parts by mass, particularly preferably from 0.1 to 30 parts by mass, per 100 parts by mass of the organo polysiloxane.

Further, in the present invention, in order to prevent gelation of the hard coating layer-forming composition at ordinary temperature and to increase the storage stability, it is preferred to adjust the pH of the hard coating layer-forming composition to be from 2.0 to 7.0, more preferably from 3.0 to 6.0, further preferably from 4.0 to 5.5. If the pH is less than 2.0 or more than 7.0, hydroxy groups bonded to silicon atoms tend to be very unstable, such being not suitable for storage. As a means to adjust the pH, addition of an acid or adjustment of the content of the curing catalyst may, for example, be mentioned. Such an acid may, for example, be an inorganic acid such as hydrochloric acid, sulfuric acid, nitric acid, phosphoric acid, nitrous acid, perchloric acid or sulfamic acid, or an organic acid such as formic acid, acetic acid, propionic acid, butyric acid, oxalic acid, succinic acid, maleic acid, lactic acid or p-toluenesulfonic acid.

The hard coating layer-forming composition to be used in the present invention is usually prepared in a form wherein the organo polysiloxane as the essential component, and various additives as optional components, are dissolved or dispersed in a solvent. It is necessary that all non-volatile components in the hard coating layer-forming composition are stably dissolved or dispersed, and for such a purpose, the solvent is contained in an amount of at least 20 mass%, preferably at least 50 mass%. More preferably, an alcohol solvent is contained in an amount of at least 20 mass%, preferably at least 50 mass%.

As an alcohol to be used for such a solvent, methanol, ethanol, 1-propanol, 2-propanol, 1-butanol, 2-butanol, 2-methyl-1-propanol, 1-methoxy-2-propanol, 2-ethoxyethanol, diacetone alcohol or 2-butoxyethanol is preferred. Among them, an alcohol having a boiling point of from 80 to 160°C is preferred from such a viewpoint that the solubility of the organo polysiloxane is good, and the coating properties are good. Specifically, ethanol, 1-propanol, 2-propanol, 1-butanol, 2-butanol, 2-methyl-1-propanol, 1-methoxy-2-propanol, 2-ethoxyethanol, diacetone alcohol or 2-butoxyethanol is preferred.

Further, the solvent to be used for the hard coating layer-forming composition to be used in the present invention includes a lower alcohol or the like generated along the hydrolysis of the raw material monomer such as an alkyltrialkoxysilane at the time of producing the organo polysiloxane, water in the water-dispersed type colloidal silica, which is not involved in the hydrolytic reaction, and, in a case where an organic solvent-dispersed type colloidal silica is used, such a dispersing organic solvent.

Further, in the hard coating layer-forming composition to be used in the present invention, a solvent other than the alcohol which can be mixed with water/alcohol, may be used in combination as a solvent other than the above described solvent, and as such a solvent, a ketone such as acetone or acetyl acetone; an ester such as ethyl acetate or isobutyl acetate, or an ether such as propylene glycol monomethyl ether, dipropylene glycol monomethyl ether or diisopropyl ether may be mentioned.

The amount of the solvent to be used in the hard coating layer-forming composition to be used in the present invention is preferably from 50 to 3,000 parts by mass, more preferably from 150 to 2,000 parts by mass, per 100 parts by mass of the total non-volatile component in the hard coating layer-forming composition.

The hard coating layer-forming composition to be used in the present invention can be obtained by uniformly mixing the above-described various components by a usual method.

### (Application and curing)

The resin substrate provided with a hard coating film of the present invention can be produced by applying the above hard coating layer-forming composition on the acrylic primer layer obtained as described above to form a coating film and curing the curable composition containing the organo polysiloxane as the main component, in the coating film.

The method for applying the hard coating layer-forming composition is not particularly limited, and a usual coating method such as a spray coating method, a dip coating method, a flow coating method, a die coating method or a spin coating method may, for example, be mentioned. It is preferred to suitably adjust the viscosity, solid content concentration, etc. of the hard coating layer-forming composition depending on the coating method to be employed.

The silicone type hard coating layer-forming composition applied on the acrylic primer layer is heated and cured usually after drying and removing the solvent under a temperature condition of at least 0°C and lower than a thermal deformation temperature of the resin substrate or the primer layer. The conditions for drying the solvent may, for example, be conditions of from 0 to 60°C and from 10 minutes to 10 hours. Otherwise, vacuum drying may, for example, be employed while adjusting the degree of reduced pressure. The thermal curing reaction is preferably carried out at a high temperature within a range not to bring about a problem in the heat resistance of the resin substrate or the primer layer, since the curing can be more quickly completed. However, for example, in a case where an organo polysiloxane having a methyl group as a monovalent organic group is employed, if the temperature at the time of thermal curing is 250°C or higher, the methyl group will be detached by thermal decomposition, such being undesirable. Therefore, the curing temperature is preferably from 50 to 200°C, more preferably from 80 to 160°C, particularly preferably from 100 to 140°C. The curing time is preferably from 10 minutes to 4 hours, more preferably from 20 minutes to 3 hours, particularly preferably from 30 minutes to 2 hours.

The thickness of the coating film formed by applying the hard coating layer-forming composition on e.g. a resin substrate, depends on the solid content concentration in the composition. It is preferred to suitably adjust the solid content concentration so that the thickness after curing would be within a predetermined range.

Here, the thickness of the cured film to be provided on the resin substrate is preferably at least 0.1 µm and at most 10 µm, more preferably at least 1 µm and at most 8 µm, particularly preferably at least 2 µm and at most 7 µm, in the state after curing which will be described hereinafter.

If the thickness of the hard coating layer is too thin, it may be difficult to secure adequate abrasion resistance. On the other hand, if the thickness of the hard coating layer is too thick, cracking or peeling is likely to occur. Therefore, in order to prevent cracking or peeling while securing adequate abrasion resistance, the thickness of the cured film (i.e. the thickness of the hard coating layer) is preferably at least 0.1 µm and at most 10 µm.

Here, this thickness means the thickness when the hard coating layer is formed alone on a substrate such as a resin substrate.

In the resin substrate having the hard coating layer of the present invention, in order to further improve the abrasion resistance or film strength, a top coating layer containing SiO₂ as the main component may be provided on the hard coating layer of the resin substrate having the hard coating layer. As the method for forming the top coating layer containing SiO₂ as the main component, it is preferred to employ a method of applying and curing poly(perhydro)silazane on the above hard coating layer, or a method such as vapor deposition or sputtering.

In the foregoing, the hard coating film-provided resin substrate 1 of the present invention has been described. However, the present invention is not necessarily limited to such a structure, and also the order to form the respective components, etc. may suitably be changed within a range where the production of the hard coating film-provided resin substrate 1 is possible.

### EXAMPLES

Now, the present invention will be described in further detail with reference to Examples. However, it should be understood that the present invention is by no means restricted by these Examples. Examples 1 to 5 are working Examples of the present invention and Examples 6 to 9 are Comparative Examples.

### <Polymethyl methacrylate solution>

Polymethyl methacrylate (PMMA) (number average molecular weight Mn=120,000, mass average molecular weight Mw=340,000, dispersion degree Mw/Mn=2.8) was dissolved in a solvent comprising 1-methoxy-2-propanol:diacetone alcohol=85:15 (mass ratio) and adjusted so that the solid content concentration became 10 mass%, to obtain polymethyl methacrylate solution P-1 as a primer composition.

Mn, Mw and Mw/Mn were obtained by gel permeation chromatography (GPC, HLC-8220GPC manufactured by Tosoh Corporation, RI detection, column: TSKguardcolum SuperHZ-L+TSKgel SuperHZ4000+HZ3000+HZ2500+HZ2000, eluent: THF).

By the following method, a composition for a primer layer was prepared. Mw of the obtained resin, etc. was obtained by the same gel permeation chromatography as mentioned above.

### <Silyl group-containing acrylic polymer solution>

### (Synthesis Example 1)

Into a 0.5 L flask equipped with a stirrer, a condenser and a thermometer, in a nitrogen stream, a mixture of 90 g of methyl methacrylate (MMA), 25 g of 3-methacryloxypropyltrimethoxysilane (MPTM) and 200 g of diacetone alcohol, was introduced and heated to 80°C. Then, 0.7 g of 2,2'-azobis(2-methylbutyronitrile) was put as a polymerization initiator, followed by stirring at from 80 to 90°C for 3 hours to copolymerize MMA and MPTA. Here, the molar ratio of MMA to MPTM as monomer components was 90:10.

The solution thus obtained, was diluted with 1-methoxy-2-propanol to bring the non-volatile component to be 10 mass%, to obtain hydrolysable silyl group-containing acrylic polymer (shown as silyl group-containing acrylic polymer) solution S-1.

Mw (weight average molecular weight) of the obtained silyl group-containing acrylic polymer was 114,000.

### (Synthesis Example 2)

Into a 0.5 L flask equipped with a stirrer, a condenser and a thermometer, in a nitrogen stream, a mixture of 80 g of methyl methacrylate (MMA), 50 g of γ-methacryloxypropyltrimethoxysilane (MPTA) and 200 g of diacetone alcohol, was introduced and heated to 80°C. Then, 0.7 g of 2,2'-azobis(2-methylbutyronitrile) was put as a polymerization initiator, followed by stirring at from 80 to 90°C for 3 hours to copolymerize MMA and MPTA. Here, the molar ratio of MMA to MPTA as monomer components was 80:20.

The solution thus obtained, was diluted with 1-methoxy-2-propanol to bring the non-volatile component to be 10 mass%, to obtain silyl group-containing acrylic polymer solution S-2.

The weight average molecular weight of the obtained silyl group-containing acrylic polymer was 68,000.

### (Synthesis Example 3)

Into a 0.5 L flask equipped with a stirrer, a condenser and a thermometer, in a nitrogen stream, a mixture of 60 g of methyl methacrylate (MMA), 100 g of γ-methacryloxypropyltrimethoxysilane (MPTA) and 200 g of diacetone alcohol, was introduced and heated to 80°C. Then, 0.8 g of 2,2'-azobis(2-methylbutyronitrile) was put as a polymerization initiator, followed by stirring at from 80 to 90°C for 3 hours to copolymerize MMA and MPTA. Here, the molar ratio of MMA to MPTA as monomer components was 60:40.

The solution thus obtained, was diluted with 1-methoxy-2-propanol to bring the non-volatile component to be 10 mass%, to obtain silyl group-containing acrylic polymer solution S-3.

The weight average molecular weight of the obtained silyl group-containing acrylic polymer was 66,000.

### (Synthesis Example 4)

22 g of 2-[2'-hydroxy-5'-(2-methacryloxyethyl)phenyl]-2H-benzotriazole (RUVA-93, manufactured by Otsuka Chemical Co., Ltd.), 25 g of γ-methacryloxypropyltrimethoxysilane (MPTA), 70 g of methyl methacrylate, 6 g of glycidyl methacrylate and 96 g of 4-methyl-2-pentanone were mixed to obtain a monomer mixture solution.

0.6 g of 2,2'-azobis(2-methylbutyronitrile) was dissolved in 49 g of 4-methyl-2-pentanone to obtain a polymerization initiator.

Into a 0.5 L flask equipped with a stirrer, a condenser and a thermometer, 41 g of diacetone alcohol was charged as a solvent and heated to 80°C in a nitrogen stream. Sequentially introduced thereto were 66 g of the monomer mixture solution and 15 g of the polymerization initiator preliminarily prepared. They were reacted at 80°C for 30 minutes, and then, the rest of the monomer mixture solution and the rest of the polymerization initiator were simultaneously dropwise added at from 80 to 90°C over 1.5 hours. Stirring was further continued at from 80 to 90°C for 5 hours.

The solution thus obtained, was diluted with 1-methoxy-2-propanol to bring the non-volatile component to be 10 mass%, to obtain silyl group-containing acrylic polymer solution S-4. Mw of the obtained silyl group-containing acrylic polymer was 71,000.

### <Primer layer-forming composition (primer composition)>

### (Preparation Example 1)

80 g of polymethyl methacrylate solution (P-1) and 20 g of silyl group-containing acrylic polymer solution (S-1) were mixed (mass ratio of 80:20 in solid content concentration), and further, as ultraviolet absorbers, 0.8 g of dibenzoresorcinol (DBR, manufactured by Clariant) and 0.2 g of a triazine type ultraviolet absorber (TINUVIN477, manufactured by BASF) were introduced to obtain primer layer-forming composition Pr-1.

### (Preparation Example 2)

60 g of polymethyl methacrylate solution (P-1) and 40 g of silyl group-containing acrylic polymer solution (S-1) were mixed (mass ratio of 60:40 in solid content concentration), and further, as ultraviolet absorbers, 0.6 g of dibenzoresorcinol (DBR, manufactured by Clariant) and 0.4 g of a triazine type ultraviolet absorber (TINUVIN477, manufactured by BASF) were introduced to obtain primer layer-forming composition Pr-2.

### (Preparation Example 3)

80 g of polymethyl methacrylate solution (P-1) and 20 g of silyl group-containing acrylic polymer solution (S-2) were mixed (mass ratio of 80:20 in solid content concentration), and further, as ultraviolet absorbers, 0.8 g of dibenzoresorcinol (DBR, manufactured by Clariant) and 0.2 g of a triazine type ultraviolet absorber (TINUVIN477, manufactured by BASF) were introduced to obtain primer layer-forming composition Pr-3.

### (Preparation Example 4)

60 g of polymethyl methacrylate solution (P-1) and 40 g of silyl group-containing acrylic polymer solution (S-2) were mixed (mass ratio of 60:40 in solid content concentration), and further, as ultraviolet absorbers, 0.6 g of dibenzoresorcinol (DBR, manufactured by Clariant) and 0.4 g of a triazine type ultraviolet absorber (TINUVIN477, manufactured by BASF) were introduced to obtain primer layer-forming composition Pr-4.

### (Preparation Example 5)

80 g of polymethyl methacrylate solution (P-1) and 20 g of silyl group-containing acrylic polymer solution (S-3) were mixed (mass ratio of 80:20 in solid content concentration), and further, as ultraviolet absorbers, 0.8 g of dibenzoresorcinol (DBR, manufactured by Clariant) and 0.2 g of a triazine type ultraviolet absorber (TINUVIN477, manufactured by BASF) were introduced to obtain primer layer-forming composition Pr-5.

### (Preparation Example 6)

To 100 g of polymethyl methacrylate solution (P-1), as ultraviolet absorbers, 0.8 g of dibenzoresorcinol (DBR, manufactured by Clariant) and 0.2 g of a triazine type ultraviolet absorber (TINUVIN477, manufactured by BASF) were introduced to obtain primer layer-forming composition Pr-6.

### (Preparation Example 7)

80 g of polymethyl methacrylate solution (P-1) and 20 g of silyl group-containing acrylic polymer solution (S-4) were mixed, and further, as an ultraviolet absorber, 0.8 g of dibenzoresorcinol (DBR, manufactured by Clariant) was introduced to obtain primer layer-forming composition Pr-7.

### (Preparation Example 8)

40 g of polymethyl methacrylate solution (P-1) and 60 g of silyl group-containing acrylic polymer solution (S-1) were mixed, and further, as ultraviolet absorbers, 0.4 g of dibenzoresorcinol (DBR, manufactured by Clariant) and 0.6 g of a triazine type ultraviolet absorber (TINUVIN477, manufactured by BASF) were introduced to obtain primer layer-forming composition Pr-8.

### (Preparation Example 9)

To 100 g of silyl group-containing acrylic polymer solution (S-1), as ultraviolet absorbers, 0.4 g of dibenzoresorcinol (DBR, manufactured by Clariant) and 0.6 g of a triazine type ultraviolet absorber (TINUVIN477, manufactured by BASF) were introduced to obtain primer layer-forming composition Pr-9.

### <Hard coating layer-forming composition (hard coating composition)>

By the following methods, hard coating compositions were prepared. Further, evaluations of organo polysiloxanes were carried out by the following methods.

### (1) Number (B) of hydroxyl groups bonded to silicon atoms/number (A) of alkoxy groups bonded to silicon atoms

Organo polysiloxanes used in Examples were only those having methoxy groups bonded to silicon atoms (SiO-CH₃) as alkoxy groups bonded to silicon atoms, and therefore, as the above (B)/(A), a ratio of Si-OH/SiO-CH₃ obtained by the following method, was used.

That is, using an infrared absorption analyzer (FT-IR, model: Avatar/Nicolet FT-IR360, manufactured by Thermo Fisher Scientific K.K.), the ratio of Si-OH/SiO-CH₃ was obtained from the area ratio of the absorption attributable to Si-OH in the vicinity of 900 cm⁻¹ to the absorption attributable to SiO-CH₃ in the vicinity of 2,860 cm⁻¹.

### (2) Analyses of bonding states of silicon atoms in organo polysiloxanes (silicone compounds)

The bonding states of silicon atoms in organo polysiloxanes, specifically the abundance ratios of T0 to T3 were, respectively, obtained from the peak area ratios of ²⁹SiNMR by means of a nuclear magnetic resonance analyzer (²⁹Si-NMR: ECP400, manufactured by JEOL Ltd.). The measuring conditions are such that a 10 mmo test tube made of polytetrafluoroethylene (PTFE) is used, proton decoupling, the pulse width is 45°, the waiting time is 15 sec, the relaxation agent contains 0.1 mass% of Cr(acac)₃ (chromium tris(acetylacetonate)) and the external standard sample is tetramethylsilane. Further, the chemical shifts of ²⁹Si-NMR attributable to the respective structures are as follows.
T0: -40 to -41 ppm
T1: -49 to -50 ppm
T2: -57 to -59 ppm
T3: -66 to -70 ppm

### (3) Number average molecular weight Mn, mass average molecular weight Mw and dispersivity Mw/Mn

They were obtained by means of gel permeation chromatography (GPC,
Waters2695, manufactured by Waters Corporation, RI detection, column: Styragel guard colum+HR1+HR4+HR5E, eluent: chloroform).

### [1] Synthesis of organo polysiloxane (a) (hereinafter referred to as "(a) component organo polysiloxane" as the case requires) and preparation of solution containing organo polysiloxane (a)

Into a 0.2 L flask, 10 g of methyl type silicone resin KR-500 (manufactured by Shin-Etsu Chemical Co., Ltd., a peak attributable to Si-OH groups is not confirmed by FT-IR, substantially solely SiO-CH₃; the abundance ratios of the respective T units are T0:T1:T2:T3=ND:15:58:27, Mn=700, Mw=1,240, Mw/Mn=1.77) and 10 g of 1-butanol were added and thoroughly stirred, and 10 g of acetic acid and 10 g of ion-exchanged water were added and further thoroughly stirred. The obtained solution was stirred at 40°C for one hour to obtain (a) component organo polysiloxane MSi-1 (MSi-1 concentration: 25 mass%).

With respect to the obtained MSi-1, a comparison with KR-500 being the raw material was carried out by means of FT-IR and ¹H-NMR, whereby a decrease of the peak attributable to SiO-CH₃ groups and an appearance of the peak attributable to Si-OH groups were confirmed. The ratio of Si-OH/ SiO-CH₃ in MSi-1 obtained from the peak area ratio of FT-IR was 41.0. MSi-1 was constituted by T units, and the abundance ratios of the respective T units obtained from the chemical shifts of ²⁹Si-NMR were T0:T1:T2:T3=ND:1.1:30.1:68.8. Mn of MSi-1 was 520, Mw was 1,150 and Mw/Mn was 2.22.

### [2] Synthesis of organo polysiloxane (b) (hereinafter referred to as "(b) component organo polysiloxane" as the case requires) and preparation of solution of organo polysiloxane (b) composition

Into a 1 L flask, 167 g of water-dispersed silica sol having an average particle size of about 30 nm (pH3.1, silica fine particle solid content: 20 mass%) and 14 g of acetic acid were charged, and 136 g of methyl trimethoxysilane was added. After stirring for one hour, the pH of the composition was stabilized at 4.5. This composition was aged at 25°C for 4 days for partial hydrolytic condensation. Thus, a solution containing (b) component organo polysiloxane PSi-1 (PSi-1 concentration: 40 mass%) was obtained.

The obtained (b) component organo polysiloxane PSi-1 had a structure composed mainly of T units, and the abundance ratios of the respective T units obtained from the chemical shifts of ²⁹Si-NMR were T0:T1:T2:T3=ND:2:54:44. In the obtained organo polysiloxane (b), monomer-form TO [R-Si(OH)₃] (R is CH₃) was not substantially present, and it was confirmed that the starting material methyltrimethoxysilane was substantially completely converted to an oligomer-form silicone compound. Mn of the obtained (b) component organo polysiloxane PSi-1 was 400, Mw was 670 and Mw/Mn was 1.68.

Then, to 100 parts by mass of the (b) component organo polysiloxane PSi-1 solution obtained as described above, 4 parts by mass of a benzophenone type ultraviolet absorber was added, followed by aging at 25°C for at least 24 hours.

By using a mixed solvent of 1-butanol:isopropanol:methanol:1-methoxy-2-propanol=40:40:15:5 (mass ratio) as a diluting solvent, a (b) component organo polysiloxane PSi-1 composition solution having 25 mass% of a non-volatile component (150°C, 45 minutes) and a viscosity of 4.4 mPa·s, was prepared.

### [3] Preparation of hard coating layer-forming composition

To the solution containing (a) component organo polysiloxane MSi-1 obtained in the above [1], the composition solution containing (b) component organo polysiloxane PSi-1 obtained in the above [2] was blended in a ratio of MSi-1:PSi-1=80:20 (mass ratio) and thoroughly mixed to obtain hard coating layer-forming composition HC-1.

### [4] Preparation of resin substrate having hard coating layer

By using the primer layer-forming composition and hard coating layer-forming composition obtained as described above, the resin substrate provided with a hard coating film in each of Examples 1 to 5 and Examples 6 to 9 was prepared, as shown below. The thickness of each of the following primer layers and hard coating layers is the thickness of each layer formed alone on a polycarbonate plate and was measured by means of an interference film thickness-measuring apparatus (Solid Lambda Thickness, manufactured by Spectra Co-op). At that time, as the refractive indices, values of primer layer n=1.56 and hard coating layer n=1.46 were used. That is, the film forming conditions were set so that the film thickness would satisfy such a value when formed alone on a polycarbonate plate, and each layer was formed under such conditions.

### (Example 1)

To a polycarbonate resin plate having a thickness of 3 mm (CARBOGLASS (registered trademark) Polish Clear (tradename, manufactured by Asahi Glass Company Limited)), primer layer-forming composition Pr-1 was applied by a dip coating method so that the film thickness would be 4 µm, and after being left at 25°C for 20 minutes, heated and cured at 120°C for 30 minutes by means of a hot air circulation system dryer (HISPEC HS250, manufactured by Kusumoto Chemicals, Ltd.)

Then, on the primer layer thus formed, hard coating layer-forming composition HC-1 was applied by a dip coating method so that the film thickness would be 3 µm and after being left at 25°C for 20 minutes, heated and cured at 120°C for one hour to prepare a resin substrate provided with a hard coating film.

### (Example 2)

A resin substrate provided with a hard coating film was prepared in the same manner as in Example 1 except that instead of primer layer-forming composition Pr-1, primer layer-forming composition Pr-2 was applied so that the film thickness would be 5 µm.

### (Example 3)

A resin substrate provided with a hard coating film was prepared in the same manner as in Example 1 except that instead of primer layer-forming composition Pr-1, primer layer-forming composition Pr-3 was applied.

### (Example 4)

A resin substrate provided with a hard coating film was prepared in the same manner as in Example 1 except that instead of primer layer-forming composition Pr-1, primer layer-forming composition Pr-4 was applied.

### (Example 5)

A resin substrate provided with a hard coating film was prepared in the same manner as in Example 1 except that instead of primer layer-forming composition Pr-1, primer layer-forming composition Pr-5 was applied so that the film thickness would be 5 µm.

### (Example 6)

A resin substrate provided with a hard coating film was prepared in the same manner as in Example 1 except that instead of primer layer-forming composition Pr-1, primer layer-forming composition Pr-6 was applied.

### (Example 7)

A resin substrate provided with a hard coating film was prepared in the same manner as in Example 1 except that instead of primer layer-forming composition Pr-1, primer layer-forming composition Pr-7 was applied so that the film thickness would be 5 µm.

### (Example 8)

A resin substrate provided with a hard coating film was prepared in the same manner as in Example 1 except that instead of primer layer-forming composition Pr-1, primer layer-forming composition Pr-8 was applied so that the film thickness would be 5 µm.

### (Example 9)

A resin substrate provided with a hard coating film was prepared in the same manner as in Example 1 except that instead of primer layer-forming composition Pr-1, primer layer-forming composition Pr-9 was applied so that the film thickness would be 5 µm.

### [5] Evaluation of resin substrate provided with hard coating film

With respect to the resin substrate provided with a hard coating film obtained in each of Examples 1 to 5 and Examples 6 to 9, evaluation of the following items was carried out. In Table 1, the results of measurement or evaluation of the appearance, adhesion, haze and abrasion resistance at the initial stage, and the appearance (weather cracking resistance) and weather resistant adhesion after the weather resistance test, are shown together with the type of the primer composition and the thickness of each layer constituting the hard coating film.

### <1> Evaluation at the initial stage

### <1-1> Initial appearance

The initial appearance of the hard coating film was visually observed, whereby the presence or absence of abnormality was judged by the following standards.
○: No abnormality observed.
×: Cracking, peeling or substantial haze observed in the hard coating film.

### <1-2> Film thickness

The film thickness of each hard coating layer was measured by means of an interference film thickness measuring apparatus (Solid Lambda Thickness, manufactured by Spectra Co-op). At that time, as the refractive index, a value of n=1.56 was used for the primer layer, and a value of n=1.46 was used for the hard coating layer.

### <1-3> Initial haze

The haze (haze value) was measured in accordance with JIS K7105 (6.4) by means of a haze meter (Model: HGM-2, manufactured by Suga Test Instruments Co., Ltd.). A haze being at most 5 is judged to be acceptable.

### <1-4> Initial abrasion resistance

The haze (haze value) was measured in accordance with JIS K7105 (6.4) by means of a haze meter (model: HGM-2, manufactured by Suga Test Instruments Co., Ltd.). Further, in accordance with JIS K5600 (5.9), on a Taber abrasion tester (model: ROTARY ABRASION TESTER, manufactured by Toyo Seiki Seisaku-Sho, Ltd.), a truck wheel CALIBRASE (registered trademark) CS-10F (manufactured by TARBER Industries) was mounted and rotated 500 times under a load of 500 g, whereupon the haze (haze value) was measured, and the haze (haze value) difference ΔH₅₀₀ between before and after the test was taken as the abrasion resistance. As an evaluation standard for the abrasion resistance, ΔH₅₀₀≦+10 is judged to be acceptable.

### <1-5> Initial adhesion

In accordance with JIS K5600 (5.6), by means of a razor blade, 11 cut lines were made in the hard coating film, at 1 mm intervals in each of the vertical and horizontal directions to form 100 squares, and an adhesive tape (CT24, manufactured by NICHIBAN CO., LTD.) was well bonded thereto, followed by a peel test. The number of squares (X) where the film remained without delamination was represented by X/100.

### <2> Weather resistance test

The following weather resistance test was carried out. That is, using an accelerated weather resistance tester (DAIPLA METAL WEATHER "KW-R5TP-A", manufactured by DAIPLA WINTES CO., LTD.) employing a metal halide lamp as a light source, three conditions of light irradiation, dew condensation and total darkness were continuously applied for 50 cycles (600 hours).

Here, the conditions for the light irradiation are such that light is applied for 4 hours under such conditions that the illuminance is 80 mW/cm² (as measured by "UIT-101" tradename, manufactured by Ushio Inc.), the black panel temperature is 63°C and the relative humidity is 80%; the conditions for the dew condensation are such that the black panel temperature is naturally left to cool from 63°C to 30°C and maintained for 4 hours under a relative humidity of 98% without irradiation with light; and the conditions for the total darkness are such that the sample is maintained for 4 hours under a relative humidity of 90% at a black panel temperature of 75°C without irradiation with light. Further, before and after the above dew condensation, showering is carried out for 10 seconds each time.

### <2-1 > Weather cracking resistance

The appearance of the hard coating film after the weather resistance test (50 cycles, 600 hours) was visually observed, whereby the presence or absence of abnormality was judged by the following standards.
○: No abnormality observed.
×: Cracking, peeling or substantial haze observed in the hard coating film.

### <2-2> Weather resistant adhesion

In accordance with JIS K5600 (5.6), by means of a razor blade, 11 cut lines were made in the hard coating film after the weather resistance test, at 1 mm intervals in each of the vertical and horizontal directions to form 100 squares, and an adhesive tape (CT24, manufactured by NICHIBAN CO., LTD.) was well bonded thereto, followed by a peel test. The number of squares where the hard coating film remained without delamination was represented by X, and the weather resistant adhesion was represented by X/100.

**TABLE 1**

| | Type of primer layer-forming composition | Type of silyl group-containing acrylic polymer solution | PMMA/ (PMMA+silyl group containing acrylic polymer) × 100 (mass ratio) | Thickness of each layer of hard coating film (µm) | | Evaluation results of resin substrate provided with hard coating film | | | | | |
|---|---|---|---|---|---|---|---|---|---|---|---|
| | | | | Primer layer | Hard coating layer | Initial | | | | After weather resistance test | |
| | | | | | | Appearance | Haze | Adhesion | Haze difference ΔH₅₀₀ | Appearance | Adhesion |
| Ex. 1 | Pr-1 | S-1 | 80 mass% | 4 | 3 | ○ | 0.6 | 100/100 | 7 | ○ | 100/100 |
| Ex. 2 | Pr-2 | S-1 | 60 mass% | 5 | 3 | ○ | 0.7 | 100/100 | 8 | ○ | 100/100 |
| Ex. 3 | Pr-3 | S-2 | 80 mass% | 4 | 3 | ○ | 0.5 | 100/100 | 8 | ○ | 100/100 |
| Ex. 4 | Pr-4 | S-2 | 60 mass% | 4 | 3 | ○ | 0.8 | 100/100 | 8 | ○ | 100/100 |
| Ex. 5 | Pr-5 | S-3 | 80 mass% | 5 | 3 | ○ | 0.7 | 100/100 | 7 | ○ | 100/100 |
| Ex. 6 | Pr-6 | Nil | 100 mass% | 4 | 3 | ○ | 0.4 | 100/100 | 8 | × | 0/100 |
| Ex. 7 | Pr-7 | S-4 | 80 mass% | 5 | 3 | ○ | 0.2 | 100/100 | 8 | × | 0/100 |
| Ex. 8 | Pr-8 | S-1 | 40 mass% | 5 | 3 | × | 16.1 | 100/100 | 9 | × | 0/100 |
| Ex. 9 | Pr-9 | S-1 | 0 mass% | 5 | 3 | × | 19.1 | 100/100 | 12 | × | 0/100 |

| | | | | | | | | | | | |
|---|---|---|---|---|---|---|---|---|---|---|---|
| 1) PMMA: Polymethyl methacrylate | | | | | | | | | | | |

As shown in Table 1, with the resin substrate provided with a hard coating film in each of Examples 1 to 5 wherein a silyl group-containing acrylic polymer (α) was incorporated in the primer layer, the initial haze (haze value) was small, the appearance was good, the haze (haze value) difference after the Taber test was at most 10, and the abrasion resistance was acceptable. Further, not only the appearance of the hard coating film after the weather resistance test was good, but also the weather resistant adhesion was excellent, and the adhesion between the hard coating layer and the primer layer was found to be improved.

Whereas, with the resin substrate provided with a hard coating film in Example 6 wherein a silyl group-containing acrylic polymer (α) was not incorporated in the primer layer, although at the initial stage, the haze (haze value) was small, the appearance was good, and the abrasion resistance was acceptable, after the weather resistance test, cracking and peeling were observed in the hard coating film, whereby the judgment for the appearance after the weather resistance test was "×" and the adhesion was also poor.

Further, also with the resin substrate provided with a hard coating film in Example 7 wherein a silyl group-containing acrylic polymer (α) containing polymerized units having an aromatic hydrocarbon group in a side chain, was incorporated in the primer layer, although at the initial stage, the haze (haze value) was small, the appearance was good, and the abrasion resistance was also acceptable, after the weather resistance test, cracking and peeling were observed in the hard coating film, whereby the judgment for the appearance after the weather resistance test was "×" and the adhesion was also poor.

Further, with the resin substrate provided with a hard coating film in Example 8 wherein the value of (content of acrylic polymer (P))/(total amount of content of acrylic polymer (P) and content of silyl group-containing acrylic polymer (α)) in the primer layer was less than 50 mass% and with the resin substrate provided with a hard coating film in Example 9 wherein the primer layer did not contain the acrylic polymer (P), at the initial stage, the haze (haze value) was large, and cracking and peeling were observed in the hard coating film, and thus, not only the appearance was poor, but also the judgment for the appearance after the weather resistance test was "×" and the adhesion was also poor.

### INDUSTRIAL APPLICABILITY

The resin substrate provided with a hard coating film of the present invention is useful as a window glass for a vehicle, to be attached to automobiles or various means of transportation, or as a window glass for a building material to be attached to building constructions such as houses and buildings.

The entire disclosure of Japanese Patent Application No. 2011-009359 filed on January 20, 2011 including specification, claims, drawings and summary is incorporated herein by reference in its entirety.

### REFERENCE SYMBOLS

1: Resin substrate provided with hard coating film, 2: resin substrate, 3: primer layer, 4: hard coating layer, S: boundary surface between primer layer and hard coating layer

## Claims

1. A resin substrate provided with a hard coating film, which comprises a resin substrate, and, formed on at least one surface thereof in order from the resin substrate side, a primer layer containing an acrylic polymer (P) and a silyl group-containing acrylic polymer (α) as main components, and a hard coating layer containing a cured product of an organo polysiloxane as a main component, wherein
the acrylic polymer (P) consists of polymerized units derived from an alkyl methacrylate having a C₁₋₆ alkyl group, and from 90 to 100 mol% of all polymerized units constituting the acrylic polymer (P) is polymerized units derived from methyl methacrylate;
the silyl group-containing acrylic polymer (α) comprises polymerized units derived from methyl methacrylate (MMA) and polymerized units having a hydrolysable silyl group and/or a SiOH group, from 50 to 95 mol% of all polymerized units constituting the silyl group-containing acrylic polymer is polymerized units based on methyl methacrylate (MMA), and the silyl group-containing acrylic polymer (α) does not contain polymerized units having an aromatic hydrocarbon group in a side chain; and
the mass ratio of the acrylic polymer (P) to the silyl group-containing acrylic polymer (α), i.e. the value of (content of the acrylic polymer (P))/(total amount of content of the acrylic polymer (P) and content of the silyl group-containing acrylic polymer (α)) × 100, is from 50 to 98 mass%.

2. The resin substrate provided with a hard coating film according to Claim 1, wherein the silyl group-containing acrylic polymer (α) contains the polymerized units having a hydrolysable silyl group and/or a SiOH group in a proportion of from 5 to 50 mol% of all polymerized units constituting the silyl group-containing acrylic polymer (α).

3. The resin substrate provided with a hard coating film according to Claim 1 or 2, wherein the silyl group-containing acrylic polymer (α) consists of the polymerized units derived from methyl methacrylate (MMA) and the polymerized units having a hydrolysable silyl group and/or a SiOH group, and the molar ratio of the polymerized units derived from methyl methacrylate (MMA) to the polymerized units having a hydrolysable silyl group and/or a SiOH group, is from 50:50 to 95:5.

4. The resin substrate provided with a hard coating film according to any one of Claims 1 to 3, wherein the polymerized units having a hydrolysable silyl group and/or a SiOH group, are at least one member selected from the group consisting of polymerized units derived from 3-methacryloxypropyltrimethoxysilane, 3-methacryloxypropylmethyldimethoxysilane, 3-methacryloxypropyldimethylmethoxysilane, 3-methacryloxypropyltriethoxysilane, 3-methacryloxypropylmethyldiethoxysilane, 3-acryloxypropyltrimethoxysilane and 3-acryloxypropylmethyldimethoxysilane, and their hydrolysates and partial hydrolysates.

5. The resin substrate provided with a hard coating film according to any one of Claims 1 to 4, wherein the silyl group-containing acrylic polymer (α) does not contain polymerized units having a hydroxyalkyl group.

6. The resin substrate provided with a hard coating film according to any one of Claims 1 to 5, wherein the acrylic polymer (P) consists of polymerized units derived from methyl methacrylate.

7. The resin substrate provided with a hard coating film according to any one of Claims 1 to 6, wherein the silyl group-containing acrylic polymer (α) has a mass average molecular weight of from 5,000 to 300,000.

8. The resin substrate provided with a hard coating film according to any one of Claims 1 to 7, wherein the acrylic polymer (P) as a main component of the primer layer has a mass average molecular weight of from 20,000 to 1,500,000.

9. The resin substrate provided with a hard coating film according to any one of Claims 1 to 8, wherein the organo polysiloxane is composed solely of T units and Q units, and their ratio in number is T : Q = from 90 to 100 : from 10 to 0.

10. A process for producing a resin substrate provided with a hard coating film, which comprises a step of applying and drying a composition for forming a primer layer containing an acrylic polymer (P) and a silyl group-containing acrylic polymer (α) as main components, on at least one surface of a resin substrate, to form a primer layer, and a step of applying and curing a composition for forming a hard coating layer containing an organo polysiloxane as a main component, on the primer layer, to form a hard coating layer, wherein
the acrylic polymer (P) consists of polymerized units derived from an alkyl methacrylate having a C₁₋₆ alkyl group, and from 90 to 100 mol% of all polymerized units constituting the acrylic polymer (P) is polymerized units derived from methyl methacrylate;
the silyl group-containing acrylic polymer (α) comprises polymerized units derived from methyl methacrylate (MMA) and polymerized units having a hydrolysable silyl group and/or a SiOH group in a side chain, from 50 to 95 mol% of all polymerized units constituting the silyl group-containing acrylic polymer (α) is polymerized units based on methyl methacrylate (MMA), and the silyl group-containing acrylic polymer (α) does not contain polymerized units having an aromatic hydrocarbon group in a side chain; and
the mass ratio of the acrylic polymer (P) to the silyl group-containing acrylic polymer (α), i.e. the value of (content of the acrylic polymer (P))/(total amount of content of the acrylic polymer (P) and content of the silyl group-containing acrylic polymer (α)) × 100, is from 50 to 98 mass%.
